(19) Europäisches Patentamt
European Patent Office
Office européen des brevets

(11) Publication number: 0 108 520
B1

(12) # EUROPEAN PATENT SPECIFICATION

(45) Date of publication of patent specification: 28.03.90

(51) Int. Cl.$^5$: G 09 G 1/00, G 06 F 15/40

(21) Application number: 83306144.3

(22) Date of filing: 11.10.83

(54) **Method for controlling windows displayed in a card image data processing system.**

(30) Priority: 11.10.82 JP 177806/82
11.10.82 JP 177805/82
11.10.82 JP 177807/82
11.10.82 JP 177808/82
11.10.82 JP 177809/82

(43) Date of publication of application:
16.05.84 Bulletin 84/20

(45) Publication of the grant of the patent:
28.03.90 Bulletin 90/13

(84) Designated Contracting States:
DE FR GB

(56) References cited:
IBM TECHNICAL DISCLOSURE BULLETIN, vol. 24, no. 8, January 1982, page 4130, New York, US; T.L. ADAM et al.: "Screen scrolling"
AFIPS PROCEEDINGS ON THE 1979 NATIONAL COMPUTER CONFERENCE, New York, US, 4th - 7th June 1979, vol. 48, pages 855-861, AFIPS Press, Montvale, New Jersey, US; R. STOTZ et al.: "The terminal for the military message experiment"
S.H. LAVINGTON, Ed.: "Information Processing 80", pages 469-473, North-Holland Publishing CO., NL; S.P. DE JONG: "The system for business automation (SBA): a unified application development system"

(73) Proprietor: FUJITSU LIMITED
1015, Kamikodanaka Nakahara-ku
Kawasaki-shi Kanagawa 211 (JP)

(72) Inventor: Ikegami, Yoshiki
Rune Inagi 714 153-2 Yanokuchi
Inagi-shi Tokyo 206 (JP)
Inventor: Hayakawa, Yoshio
1-17-41, Aoki
Kawaguchi-shi Saitama 332 (JP)
Inventor: Sato, Yasuaki
8-2, Matsugae-cho
Sagamihara-shi Kanagawa 228 (JP)
Inventor: Matsumoto, Fumio
3-17-56, Tsunashima Higashi Kohoku-ku
Yokohama-shi Kanagawa 223 (JP)

(74) Representative: Fane, Christopher Robin King et al
HASELTINE LAKE & CO. Hazlitt House 28
Southampton Buildings Chancery Lane
London, WC2A 1AT (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 108 520 B1

Courier Press, Leamington Spa, England.

## Description

The present invention relates to a method for controlling a plurality of card images, i.e., "windows", displayed in a card image data processing system.

In usual offices, office workers store information in physical card systems. That is, they write the information on to cards and store the cards in filing boxes.

The development of word processing, however, has made possible electronic card systems wherein information is stored on card images in a floppy disk or other memory medium, thereby enhancing office efficiency. In such a system, a card image is displayed on a display unit and information is added thereon.

A card image is comprised of common card mode data for a plurality of card images, such card images with common card mode data being considered a "box", and individual card data for each card image.

In some systems, a plurality of card images belonging to different boxes can be simultaneously displayed on the display unit and successively processed. It may be desired to enlarge a card image, i.e., a window for displaying each processed card mode data. Previously when enlarging a card image, it has usually been necessary to push a series of keys - a relatively complex operation which increases work.

An article entitled "The system for Business automation (SBA): a unified application development system" by S. Peter de Jong, in Information Processing 80, IFIP, 1980, pages 469 to 473, North Holland Publishing Co., discloses a system which employs a Query-by-Example relational data base language (QBE). QBE is said to be a two-dimensional language consisting of tables and boxes, with which a screen manager deals directly. Fig. 1 of the article gives an example of a table (INVENTORY) and boxes (the COMMAND box and the CONDITION box) in relation to QBE.

The article also refers to the SBA system and says that, unlike QBE, SBA does not contain a preferred set of objects. It is said that the SBA system is constructed out of abstract objects called BOXes. Each box is independent and can execute concurrently. Each box contains the operations necessary to support the object and the object's data. It is said that the SBA box is a general container which can represent data, programs, people, locations, etc. The SBA box is said to have four sections:- IDENTIFIER, INPUT, OUTPUT and CONTENTS.

AFIPS Conference Proceedings, 1979 National Computer Conference, New York, U.S., 4-7 June 1979, Vol. 48, pages 855-861, AFIPS Press, Montvale, New Jersey, in an article entitled "The terminal for the Military Message Experiment" discloses a terminal which supports display windows, each of which can be scrolled independently.

An embodiment of the invention can scroll a processed window, i.e., an active window. Note that "active window" means a window in which a cursor is displayed. Previously, in a card image data processing system, a scrolling operation was performed on the entire display picture including an active window.

An embodiment of the present invention can provide a method for controlling a plurality of card images, i.e. windows, in a card image data processing system, in which windows can be enlarged.

Another embodiment of the present invention can provide a method for controlling such a plurality of windows, in which a processed window, i.e. an active window, can easily be scrolled.

According to the invention as claimed in Claim 1, there is provided a method for controlling a plurality of windows having boundary rows therebetween and being displayed lengthwise on a display unit, each of said windows displaying a part of a page of a card image belonging to a box of a card image data processing system, said card image comprising common card mode data for card images belonging to the same box and individual card data for each card image, in which method when an operator instructs upward movement of tlhe cursor in the active window, the active window being the window in which the cursor is located:-

the system automatically operates to determine whether or not the cursor has reached a row next to the upper boundary row of the active window and to determine whether or not there is a window above an active window, and when the determinations are positive;

the system automatically performs a down-scrolling operation upon the active window until the first row of a card image displayed in the active window reaches the row next to an upper boundary row of the active window, when said cursor is moved up;

and the system automatically moves up the upper boundary row of the active window after the first row of the card image displayed in said active window reaches the row next to the upper boundary row of the active window, when the cursor is moved up;

and in which method when an operator instructs downward movement of the cursor in the active window;

the system automatically operates to determine whether or not the cursor has reacheod a row next to the bottom boundary row of the active window and to determine whether or not there is a window below the active window, and when the determinations are positive;

the system automatically performs an up-scrolling operation upon the active window until the bottom row of the card image displayed in the active window reaches the row next to a bottom boundary row of the active window, when said cursor is moved down;

and the system automatically moves down the bottom boundary row of the active window after the bottom row of the card image displayed in the active window reaches the row next to the bottom boundary row of the active window, when said cursor is moved down.

Reference will now be made, by way of example, to the accompanying drawings, wherein:

Figs. 1 and 2 show the examples of card images to which the present invention may be applied;

Fig. 3 shows examples of boxes to which the present invention may be applied;

Fig. 4 is an example of a display picture for explaining an embodiment of the present invention;

Fig. 5 is a block diagram of a card image data processing system embodying the present invention;

Fig. 6 is a detailed block diagram of a random-access memory (RAM) of Fig. 5;

Fig. 7 is a flowchart of the operation of the system of Fig. 5;

Fig. 8A is a detailed flowchart of a step in Fig. 7;

Figs. 8B, 8C, and 8D are diagrams supplementing the flowchart of Fig. 8A;

Fig. 9 is a detailed flowchart of a step in Fig. 7;

Figs. 10 and 11 are flowcharts of the operation of the system of Fig. 5;

Figs. 12, 13A, and 13B are detailed flowcharts of steps in Fig. 12;

Figs. 13C, 13D, 13E, and 13F are diagrams supplementing Figs. 13A and 13B;

Figs. 14 and 15A are flowcharts of the operation of the system of Fig. 5;

Fig. 15B is a diagram for supplementing Fig. 15A;

Fig. 16A is a detailed flowchart of a step of Fig. 15;

Fig. 16B is a diagram supplementing Fig. 16A; and

Figs. 17 through 22 are flowcharts of the operation of the system of Fig. 5.

In an embodiment of the invention, information having a predetermined format is stored as a card image in a card image data processing system. During processing, this card image is displayed on a display unit.

A card image is formed by common form data, i.e., blank form data, and individual card data. The common blank form data and individual card data are stored separately in memory units or floppy disks and are merged and displayed on the display unit as occasion demands.

In Figs. 1 and 2, which illustrate examples of blank forms, "......" indicates a "character field", in which letters and other characters may be inserted, and " UUU,UUU" indicates a "numeric field", in which numerals may be inserted.

A card image is comprised of common card mode data (blank form data) for all the card images belonging to a box and individual card data (field data). The common card mode data is comprised of, for example, a title "CUSTOMER CARD", field names "CUSTOMER NO.", "CUSTOMER'S NAME", "ADDRESS", "PHONE", "AGE", "NAME", and the like, while the individual card data is inserted in the places indicated by marks "...." and "UUUU", as illustrated in Fig. 1.

The number of card images having a common format as illustrated in Fig. 1 or 2 is generally large, therefore, the concept of a "box" is introduced. Figure 3 illustrates examples of boxes for use with the present invention. In Fig. 3, numeral 1 designates a floppy disk, numerals 2 and 2′ designate boxes, and numerals 3—1, 3—2, ———, 3′—1, 3′—2, ——— designate card images. In order to process a group of card images as a box, the following tables (or memory units) are prepared.

i) Box profile table for storing box number, box name, lines, and the like.

ii) Field definition information table for storing start coordinates of fields, attributes such as the presence or absence of a comma, and the like.

iii) Field name table for storing names of fields.

iv) Card data table for storing card data which will be written into the above-mentioned fields with a page number.

A card image is made by combining the contents of the above-mentioned tables.

In Fig. 4, which illustrates a display picture for explaining an embodiment of the present invention, the picture is divided into two windows 41 and 42. In the window 41, a card image of page 7 of a box "BILL" is displayed. Page 7 of the box "BILL" is used for Mr. TARO FUJITSU. In the window 42, a card image of page 7 of a box "RECEIPT SLIP" is displayed. Page 7 of the box "RECEIPT SLIP" is also used for Mr. TARO FUJITSU. Therefore, various operations can be performed upon the card data of the window 41 and that of the window 42, e.g., retrieval operations, sort operations, and statistical operations.

When processing the card data displayed in the window 41, a cursor (not shown) is displayed in the window 41. No cursor is displayed in the window 42. The card images of the windows 41 and 42 can be independently scrolled by moving the cursor. Further, the windows 41 and 42 can be enlarged or reduced by moving the cursor. Of course, in this case, when the window 41 is enlarged, the window 42 is reduced.

Switching of a page of a card image displayed in the window 41 or 42 is performed within the same box by using page keys. Switching of an active window is performed by using a window switching key.

In Fig. 4, numerals 43, 44, and 45 designate boundary rows. The boundary rows 43 and 44 are called header rows, since box numbers, box names, and page numbers are displayed thereon.

In Fig. 5, which illustrates a card image data processing system embodying the present invention, reference numeral 51 designates a microprocessor unit (MPU); 52 a RAM for storing temporary data; 53 a read-only memory (ROM) for storing programs, constants, and the like; 54 a keyboard; 55 a keyboard control circuit; 56 a display unit (36 rows x 48 columns); 57 an image buffer for storing the content of the display unit 56; 58 a character generator; 59 a display control circuit; 60 floppy disks; 61 a floppy disk control circuit; 62 an address bus; 63 a data bus; and 64 a clock generator for supplying clock signals to the MPU 61 and the like.

In Fig. 6, which is a detailed block diagram of the RAM 52, numeral 61 designates an active window number area for activating the window No. 1 or 2 (corresponding to the window 41 or 42), 62 an area for the window NO. 1, and 63 an area for the window NO. 2. Note that, however, the number of areas such as 62 and 63, i.e., the number of windows, can be more than two.

The areas 62 and 63 will be explained in more detail. Each of the areas 62 and 63 comprises a window open area 601 (601'), a box number area 602 (602'), a box name area 603 (603'), a box profile information area 604 (604'), a field definition information table area 605 (605'), a field name table 606 (606'), a card image buffer area 607 (607') (60 rows x 96 columns) for storing card image data, a record buffer area 608 (608') for storing card data, a page number area 609 (609'), and a display picture control information area 610 (610'). The contents of the field definition information area 605, the field name table 606, and the record buffer 608 are merged into the card image buffer area 607, thereby obtaining a page of card image.

Note that, when the current data in the area 62 or 63 is no longer needed, it is transmitted to the floppy disks 60. In place of this, new data for another box is loaded into the area 62 or 63. That is, switching of a box is performed.

The display picture control information area 610 (or 610') comprises five areas 611 (or 611') through 615 (or 615'). The area 611 stores the start row (absolute coordinate) of a window assigned to a box on the display picture which has, for example, 36 rows (see Fig. 8B). The area 612 stores the end row (absolute coordinate) of the assigned window on the display picture. Note that "absolute coordinates" means the coordinates on the display picture. The area 613 stores the Y-coordinate (relative coordinate) of the displayed part of a card image, and the area 614 stores the X-coordinate (relative coordinate) of the displayed part of the card image. Note that "relative coordinates" means the coordinates on the card image. Such X- and Y-coordinates are shown in Fig. 8D, in which an area A designates the displayed part of a card image. The area 615 stores a cursor location i.e., the relative coordinates of a cursor on the card image. When a box is activated by the value of the active window area 61, the relative coordinates of the cursor location of the activated box are transformed to the absolute coordinates of the display picture in which the cursor is located.

The operation of the card image data processing system of Fig. 5 will now be explained with reference to Figs. 7 through 22. First, at step 701, the MPU 51 selects a box from the floppy disks 60. Then, at step 702, the MPU 51 opens the selected box, i.e., the MPU 51 loads the box number, the box name, the box profile information, the field definition information, the field name information, and the card data from the floppy disks 60 to the areas 602, 603, 604, 605, 606, and 608, respectively, of the window NO. 1 area 62 (or the window NO. 2 area 63). In this case, the transfer of card data between the record buffer area 608 and the floppy disks 60 is preferably performed with blocks (corresponding to a plurality of pages of card data) rather than with individual records (corresponding to one page of card data). In addition, the field region of the card image buffer area 607 remains cleared.

At step 703, the MPU 51 searches for a first page of card data in the record buffer area 608. Then, at step 704, the MPU 51 transfers the searched first page of card data from the record buffer area 608 to the field area of the card image buffer area 607. Simultaneously, the MPU 51 writes "1" into the page number area 609.

In step 704, first, card data is written into "independent fields" which have independent attributes, such as character or numeric fields, and the lengths of the fields. In this case, card data is converted into a code which is written into a numeric field, while card data is written without any conversion into a character field. After completing the writing of card data into all the independent fields, card data is written into "repeated fields" which have the same attributes as the first row within the repeated fields.

Next, at step 705, the MPU 51 sets up a flag in the window open area 601 thereby opening the window NO. 1, which will be later explained in more detail. At step 706, the MPU 51 writes the box number, the box name, and the page number (in this case, "1") into the header row area of the image buffer 57, thereby displaying the box number, the box name, and the page number in the header row.

At step 707, the MPU 51 writes the content of the card image buffer area 607 into the image buffer 57 so as to display the content of the card image buffer area 607. Of course, in this case, only part of the content of the card image buffer area 607 is displayed, since the card image buffer area (60 rows x 96 columns) is larger than the image buffer 57, i.e., the display picture area (36 rows x 48 columns).

At step 708, the MPU 51 writes the relative coordinates of the first field of the card image buffer area 607 into the cursor location area 615. As a result, the relative coordinates are transformed into the absolute coordinates of the image buffer area 57 so as to display the cursor on the corresponding place. Then control is transferred to step 1001 of Fig. 10.

The step 705 of Fig. 7 will be explained with reference to Figs. 8A through 8D. At step 801 of Fig. 8A, the MPU 51 determines whether or not there is a window in the image buffer 57, i.e., in the display unit 56. If there is no window, the MPU 51 searches the window open areas 601 and 601'. If there is, control is transferred to step 802 in which the MPU 51 writes a scale code into the first row of the image buffer 57, thereby displaying a scale row 81 as illustrated in Fig. 8B. Then, at step 803, the MPU 51 writes "2" into start row area 611 and, at step 804, writes "32" into the end row area 612. As a result, a window NO. 1 area 83 is established as illustrated in Fig. 8B. Then, control is transferred to step 805.

If the determination at step 801 is negative, control is transferred to step 808, in which the MPU 51 divides the window area into a plurality of areas, for example, two window areas 83-1 and 83-2 as illustrated in Fig. 8C. At step 809, the MPU 51 sets the start and end rows of each window. That is, the MPU 51 writes "2" and "16" into the start row area 611 and the end row area 612, respectively, and writes "18" and "32" into the start row area 611' and the end row area 612', respectively. Next, at step 810, the MPU 51 writes a boundary row code (in this case, a header row code) into the 17-th row of the image buffer 57, thereby displaying a boundary row 82-2 as illustrated in Fig 8C. Then, at step 811, the MPU 51 writes the content of the old card image buffer area 607' into the area of the image buffer 57 corresponding to the area 83-2 of Fig. 8C. Then, control is transferred to step 805.

At step 805, the MPU 51 writes "0" into both the start Y- and X-areas 613 and 614, thereby displaying the initial area of the card image buffer area 607 as indicated by $A_0$ in Fig. 8D. Then, at step 807, the MPU 51 writes boundary codes into the lst and 33-rd rows of the image buffer 57, thereby displaying the boundary rows 82 (or 82-1) and 84 as illustrated in Figs. 8B and 8C. Thus, the routine of Fig. 8A is completed.

The step 708 of Fig. 7 will be explained in more detail with reference to Fig. 9. At step 901, the MPU 51 searches for the first field which has the smallest coordinates from the field definition information table area 605. Then, at step 902, the MPU 51 determines whether the first field is a numeric field or a character field. If the first field is a character field, control is transferred to step 903, in which the MPU 51 writes the first relative coordinates of the start field into the cursor location area 615. As a result, at step 905, the relative coordinates of the cursor are transformed into absolute coordinates so that the cursor is displayed at the top and left side of the first field. If the start field is a numeric field, control is transferred to step 904, in which the MPU 51 writes the relative coordinates of the first digital place of the numeric field into the cursor location area 615. As a result, at step 905, the relative coordinates are transformed into absolute coordinates so that the cursor is displayed at the first digital place of the numeric field.

Note that the transformation between the relative coordinates of the card image buffer area and the absolute coordinates of the image buffer 57 is performed by using the content of the start row area 611 (611'), the end row area 612 (612'), the start Y-coordinate area 613 (613'), and the start X-coordinate area 614.

The routine of Fig. 10 will be explained. At step 1001, a key or keys are pushed. As a result, the next operation will be performed in accordance with the pushed keys. At step 1002, the MPU 51 determines whether or not a cursor key is pushed. If pushed, control is transferred to step 1101 of Fig. 11, which moves the cursor. The step 1101 will be later explained in detail. Next, at step 1102, the MPU 51 determines whether or not the cursor is directed upward. If the cursor is directed upward, at step 1103, the MPU 51 determines whether or not there was an upper field at step 1101. That is, at step 1101, the cursor was going to an upper field. However, if there was no upper field, the cursor remained at the same place. If there was no upper field, control is transferred to step 1104, in which the MPU 51 determines whether or not there is a window above an active window in which the cursor is displayed. If the determination at step 1103 or 1104 is negative, control returns to step 1001 of Fig. 10. If the determination at step 1104 is affirmative, control is transferred to step 1105, in which the subroutine of Fig. 13A is performed. Then, control returns to step 1001 of Fig 10.

If the determination step 1102 is negative, control is transferred to step 1106, in which the MPU 51 determines whether or not the cursor is directed downward. If the cursor is directed downward, at step 1107, the MPU 51 determines whether or not there was a lower field at step 1101. That is, at step 1101, the cursor was going to a lower field. However, if there was no lower field, the cursor remained at the same place. If there was no lower field, control is transferred to step 1108, in which the MPU 51 determines whether or not there is a window below an active window in which the cursor is displayed. If the determination at step 1106, 1107, or 1108 is negative, control returns to step 1001 of Fig. 10. If the determination at step 1108 is affirmative, control is transferred to step 1109, in which a subroutine of Fig. 13B similar to that of Fig. 13A is performed. Then, control returns to step 1000 of Fig. 10.

Step 1101 of Fig. 11 will now be explained in more detail with reference to Fig. 12. At step 1201, the MPU 51 determines whether or not the cursor is presently in a character field. If in a character field, control is transferred to step 1207, in which the MPU 51 moves the cursor along the character field. As a result, at step 1208, the MPU 51 determines whether or not the cursor is outside of the character field. If the cursor becomes outside of the character field, control is transferred to step 1202. If the cursor remains within the character field, control is transferred to step 1209.

At step 1202, the MPU 51 searches for a field along the motion direction of the cursor. In this case, the MPU 51 searches the field definition information table area of an active window. As a result of searching, at step 1203, the MPU 51 determines whether or not a field is detected. If not detected, control is transferred to step 1206 in which the MPU 51 sets up a flag F. That is, the flag F (= "1") means that the cursor cannot move due to the absence of a destination.

If the determination at step 1203 is affirmative, control is transferred to step 1204, in which the MPU 51 sets the initial location of the cursor. That is, in the case of a character field, the MPU 51 writes the first relative coordinates thereof into the cursor location area 615 (or 615'). In the case of a numeric field, the MPU 51 writes the relative coordinates of the first digital place thereof into the cursor location area 615 (or 615'). Then, control is transferred to step 1205, in which the cursor is displayed. The step 1205 will be explained later with reference to Figs. 16A and 16B. At step 1209, the MPU 51 removes the flag F.

Note that the flag F is used in steps 1103 and 1107 of Fig 11.

Step 1105 of Fig. 11 will be explained in more detail with reference to Fig. 13A. At step 1301, the MPU 51 determines whether or not the cursor is on the header row (boundary row). At step 1302, the MPU 51 determines whether or not the cursor is on a row next to, and lower than the header row. Now, assume that the cursor is far away from and lower than the header row. Then, control is transferred from steps 1301 and 1302 to step 1303, in which the cursor is moved up. Then, at step 1304, the MPU 51 determines whether or not the cursor key is still being pushed. If still pushed, control returns to step 1301. Next, assume that the cursor reaches the row next to the header row. In this case, control is transferred to step 1306, in which the MPU 51 determines whether or not the first row of a card image displayed in the lower window such as NO. 2 of Fig. 8C is on the row next to the header row. If the above-mentioned first row is not on the row next to the header row, control is transferred to step 1307, in which the window NO. 2 is scrolled down. If the cursor key is still being pushed, the above-mentioned first row finally reaches the row next to the header row. In this case, control is transferred from step 1304 through steps 1301, 1302, and 1306 to step 1308, in which the cursor is displayed on the header row. Even in this state, if the cursor key is still being pushed, control is transferred from step 1304 through step 1301 to step 1309. At step 1309, the MPU 51 moves up the header row, i.e., enlarges the window NO. 2. Of course, in this case, the window NO. 1 is reduced. If the determination at step 1304 is negative, control is transferred to step 1305, in which the cursor is displayed at the previous location. Thus, the routine of Fig. 13A is completed.

Step 1109 of Fig. 11 will be explained in more detail with reference to Fig. 13B which is similar to Fig. 13A. At step 1301', the MPU 51 determines whether or not the cursor is on the header row. At step 1302', the MPU 51 determines whether or not the cursor is on a row next to and above the header row. Now, assume that the cursor is far away from and above the header row. Then, control is transferred from steps 1301' and 1302' to step 1303', in which the cursor is moved down. Then, at step 1304', the MPU 51 determines whether or not the cursor key is still being pushed. If still pushed, control returns to step 1301'. Next, assume that the cursor reaches the row next to the header row. In this case, control is transferred to step 1306', in which the MPU 51 determines whether or not the bottom row of a card image displayed in the upper window such as NO. 1 of Fig. 8C is on the row next to the header row. If the above-mentioned bottom row is not the row next to the header row, control is transferred to step 1307', in which the window NO. 1 is scrolled up. If the cursor key is still being pushed the above-mentioned bottom row finally reaches the row next to the header row. In this case, control is transferred from step 1304' through steps 1301', 1302', and 1306' to step 1308', in which the cursor is displayed on the header row. Even in this state, if the cursor key is still being pushed, control is transferred from step 1304' through step 1301' to step 1309'. At step 1309', the MPU 51 moves down the header row, i.e., enlarges the window NO. 1. Of course, in this case, the window NO. 2 area is reduced. If the determination at step 1304' is negative, control is transferred to step 1305' in which the cursor is displayed at the previous location. Thus, the routine of Fig. 13B is completed.

The header moving-up step 1309 of Fig. 13A and the header moving-down step 1309' of Fig. 13B are similar to each other. The step 1309 will be explained with reference to Figs. 13C and 13D. That is, the display picture as indicated by $X_1$ in Fig. 13C is scrolled up by one row. As a result, as illustrated in Fig. 13D, the data "456 ———" disappears from the display picture. In place of this, a space row indicated by $S_1$ is generated. Therefore, data "XYZ ———" is transmitted from the card image buffer area to the area of the image buffer 57 corresponding to the space row $S_1$. As a result, regarding the display picture control information, the end row value of the window NO. 1 decreases and the start row value of the window NO. decreases. Similarly, in step 1309', the display picture as indicated by $X_2$ in Fig. 13E is scrolled down by one row. As a result, as illustrated in Fig. 13F, the data "ABC ———" disappears from the display picture. In place of this, a space row indicated by $S_2$ is generated. Therefore, data "789 ———" is transmitted from the card image buffer area to the area of the image buffer 57 corresponding to the space row $S_2$. As a result, regarding the display picture control information, the end row value of the window NO. 1 increases and the start row value of the window NO. 2 increases.

If the determination at step 1002 of Fig. 10 is negative, control is transferred to step 1003, in which the MPU 51 determines whether or not a page key is pushed. If pushed, control is transferred to step 1401 of Fig. 14. Note that, in this case, the page key is one of a previous page key, a next page key, a page indicating key, and an end page key. At step 1401, the MPU 51 stores card data from the record buffer 608 to the floppy disks 60.

Next, at step 1402, the MPU 51 determines whether or not there is a requested page in the floppy disks 60. For example, if the request page is larger than a predetermined value, such a page is not in the floppy disks 60. If there is, control is transferred to step 1403, in which the MPU 51 loads such a requested page of card data, belonging to an active window such as NO. 1 indicated by the active window number area 61, from the floppy disks 60 to the record buffer 608.

If the determination at step 1402 is negative, control is transferred to step 1404, in which the MPU 51 fills the record buffer with field marks "..." or "⊔⊔⊔,⊔⊔⊔". Then, at step 1405, the MPU 51 merges the content of the record buffer 608 into the card image buffer area 607.

At step 1406, the MPU 51 writes the part of content of the card image buffer area 607 into the image buffer 57 in accordance with the content of the picture control information area 610. Then, at step 1407, the MPU 51 writes the page number into the header row area of the image buffer 57, thereby displaying the page number. Note that a page number requested by a page key is stored in the page number area 609. Therefore, if a page key is pushed, the content of the page number area 609 is renewed. Thus, control returns to step 1001 of Fig. 10.

If the determination at step 1003 of Fig. 10 is negative, control is transferred to step 1004, in which the MPU 51 determines whether or not a window switching key is pushed. If pushed, control is transferred to step 1501 of Fig. 15A. At step 1501, the MPU 51 determines whether or not there is only one window in the display picture. In this case, the MPU 51 searches the window open areas 601, 601', ———. If only one, control returns to step 1001 of Fig. 10.

If not only one, control is transferred to step 1502 in which the MPU 51 determines whether or not there is a window which has a larger number than that of the current active window. If there is, at step 1503, the MPU 51 adds +1 to the data of the active window area 61, so that an active window is switched. If the determination at step 1502 is negative, control is transferred to step 1504, in which the MPU 51 writes the smallest number into the active window area 61. Then at step 1504, the MPU 51 displays the cursor at the real cursor location designated by the cursor location area 615 (or 615') of the newly active window. That is, switching of an active window is performed. Thus, control returns to step 1001 of Fig. 10.

When the above-mentioned switching operation of an active window is performed as illustrated in Fig. 15A, it can be understood that the active window number is changed as indicated by arrows in Fig. 15B. Note that the number of windows is n.

The step 1205 of Fig. 12 or the step 1505 of Fig. 15A will be explained in more detail with reference to Figs. 16A and 16B. At step 1601 of Fig. 16A, the MPU 51 determines whether or not the cursor is displayed in the display picture. If displayed, control is transferred to step 1610. Otherwise, control is transferred to step 1602, in which the MPU 51 determines whether or not the cursor is above a window area. For example, the cursor indicated by $C_1$ is above the window area WA (36 rows x 48 columns), as shown in Fig. 16B. Here, note that CA indicates the card image buffer area (60 rows x 96 columns).

If the determination at step 1602 is affirmative, control is transferred to step 1603 in which a down-scrolling operation is performed, so that the cursor location reaches the end of the window area WA. If the determination at step 1602 is negative, control is transferred to step 1604, in which the MPU 51 determines whether or not the cursor is below the window area. For example, the cursor indicated by $C_2$ is below the window area WA.

If the determination at step 1604 is affirmative, control is transferred to step 1605, in which an up-scrolling operation is performed, so that the cursor reaches the end of the window area WA. If the determination at step 1604 is negative, control is transferred to step 1606, in which the MPU 51 determines whether or not the cursor is on the right side of the window area. For example, the cursor indicated by $C_3$ is on the right side of the window area WA.

If the determination at step 1606 is affirmative, control is transferred to step 1607, in which a left belt scrolling operation is performed so that the cursor reaches the end of the window area WA. If the determination at step 1606 is negative, control is transferred to step 1608, in which the MPU 51 determines whether or not the cursor is on the left of the window area. For example, the cursor indicated by $C_4$ is on the left side of the window area WA.

If the determination at step 1608 is affirmative, control is transferred to step 1609, in which a right-scrolling operation is performed, so that the cursor location reaches the end of the window area WA. At step 1610, the MPU 51 converts the relative coordinates of the cursor location into the absolute coordinates thereof and writes them into the image buffer 56, thereby displaying the cursor at step 1611. Thus, the routine of Fig. 16A is completed.

If the determination at step 1004 of Fig. 10 is negative, control is transferred to step 1005, in which the MPU 51 determines whether or not a box access key is pushed. If pushed, control is transferred to step 1701, of Fig. 17. At step 1701, the MPU 51 displays a menu of boxes. Then, at step 1702, the worker selects and opens a box. That is, the MPU 51 loads the box number, the box name, the box profile information, the field definition information, and the field name information to the corresponding areas of the window NO. 1 or NO. 2.

At step 1703, the MPU 51 loads a first page of card data to the record buffer area 608 (or 608'). Then, at step 1704, the MPU 51 merges the content of the record buffer area 608 (or 608') into the card image buffer area 607 (or 607'). Then, at step 1705, the MPU 51 opens a window, as illustrated in Fig. 8A. At step 1706, the MPU 51 displays the box number, the box name and the page number (in this case, "1") on the header row of the window opened at step 1705. At step 1707, the MPU 51 displays the content of the card image buffer area 607 in the display picture of the display unit 56. Then, at step 1708, the MPU 51 displays the cursor on the first field of the content of the card image buffer area 607. At step 1709, the MPU 51 activates the opened window. Thus, control returns to step 1001 of Fig. 10.

If the determination at step 1005 of Fig. 10 is negative, control is transferred to step 1006, in which the MPU 51 determines whether or not a box access release key is pushed. If pushed, control is transferred to step 1801 of Fig. 18. At step 1801, the MPU 51 closes a box belonging to the active window. That is, the MPU 51 stores the card data of the record buffer of the active window to the floppy disks 60. In addition, the MPU 51 stores the box profile information of the area 604 (or 604') to the floppy disks 60. Then, at step 1802, the MPU 51 closes the active window, so as to increase the area of the other window. At step 1803, the MPU 51 performs switching of an active window. In this case, the opened window having the smallest window number is activated. At step 1804, the MPU 51 displays the cursor at the cursor location of the new active window. Thus, control returns to step 1001 of Fig. 10.

If the determination at step 1006 of Fig. 10 is negative, control is transferred to step 1007, in which the MPU 51 determines whether or not an up(down)-scrolling key is pushed. If pushed, control is transferred to step 1901 of Fig. 19. At step 1901, the MPU 51 performs an up(down)-scrolling operation upon the active window within the start row and the end row loaded on the areas 611 (or 611') and 612 (or 612'). That is, the header row is not scrolled. However, no up-scrolling operation is performed when the end of the card is displayed, and no down-scrolling operation when the start of the card is displayed.

Note that, as a result of a scrolling operation, a space area is generated. Therefore, at step 1902, the MPU 51 fills the space area with the corresponding data of the card image buffer area 607 (or 607'). At step 1903, the MPU 51 renews the picture control information of the active window. That is, the MPU 51 increases the start Y-coordinate value of the area 613 (or 613') in the case of an up-scrolling, while the MPU 51 decreases the start Y-coordinate value in the case of a down-scrolling. Thus, control returns to step 1001 of Fig. 10.

If the determination at step 1007 of Fig. 10 is negative, control is transferred to step 1008, in which the MPU 51 determines whether or not a right(left)-scrolling key is pushed. If pushed, control is transferred to step 2001, of Fig. 20. At step 2001, the MPU 51 performs a right(left)-scrolling operation upon the active window within the start row and the end row loaded on the areas 611 (or 611') and 612 (or 612'). That is, the header row is not scrolled. However, no right-scrolling operation is performed when the left side of the card is displayed, and no left-scrolling operation when the right side of the card is displayed.

Note that, as a result of a scrolling operation, a space area is generated. Therefore, at step 2002, the MPU 51 fills the space area with the corresponding data of the card image buffer area 607 (or 607'). At step 2003, the MPU 51 renews the picture control information of the active window. That is, the MPU 51 decreases the start-coordinate value of the area 614 (or 614') in the case of a right-scrolling, while the MPU 51 increases the start X-coordinate value in the case of a left-scrolling. Thus, control returns to step 1001 of Fig. 10.

If the determination at step 1008 of Fig. 10 is negative, control is transferred to step 1009. Now, in this particular embodiment, there is provided a Japanese language processing function, wherein words are typed in by the phonetic "hiragana" cursive syllabary and then, when necessary, "transformed" into the corresponding ideographic "kanji" characters. In step 1009, the MPU 51 determines whether or not "hiragana" keys are pushed. If pushed, control is transferred to step 2101 of Fig. 21, which determines whether or not the cursor is in a character field. Only when the cursor is in a character field, the MPU 51 performs a "hiragana"-to-"kanji" transformation upon the "hiragana" inputted into the image buffer 57. As a result, the codes of transformed "kanji" are written into the card image buffer area 607 (or 607'). Simultaneously, the "kanji" are displayed on the display unit 56. Then, control returns to step 1002 of Fig. 10.

If the determination at step 1009 of Fig. 10 is negative, control is transferred to step 1010, in which the MPU 51 determines whether or not a numeric key is pushed. If pushed, control is transferred to step 2201 of Fig. 22. At step 2201, the MPU 51 determines whether or not the cursor is in a character field. If the cursor is in a character field, at step 2202, the MPU 51 writes the numeral as a character into the card image buffer area 607 (or 607'). Otherwise, at step 2203, the, MPU 51 writes the codes of the numeral into the card image buffer area 607 (607'). Thus, control returns to step 1001 of Fig. 10.

If the determination at step 1010 of Fig. 10 is negative, control is transferred to step 1011, in which the MPU 51 determines whether or not an end key is pushed. If pushed, control is transferred to step 1012, in which an initial menu having a plurality of instructions is displayed on the display unit 56. If not, control returns to step 1001 of Fig. 10.

As explained hereinbefore, in an embodiment of the invention, the area of a window can be increased or decreased.

## Claims

1. A method for controlling a plurality of windows having boundary rows therebetween and being displayed lengthwise on a display unit, each of said windows displaying a part of a page of a card image belonging to a box of a card image data processing system, said card image comprising common card mode data for card images belonging to the same box and individual card data for each card image, in which method when an operator instructs upward movement of the cursor in the active window, the active window being the window in which the cursor is located:-

the system automatically operates to determine whether or not the cursor has reached a row next to the upper boundary row of the active window and to determine whether or not there is a window above an active window, and when the determinations are positive;

the system automatically performs a down-scrolling operation upon the active window until the first row of a card image displayed in the active window reaches the row next to an upper boundary row of the active window, when said cursor is moved up;

and the system automatically moves up the upper boundary row of the active window after the first row of the card image displayed in said active window reaches the row next to the upper boundary row of the active window, when the cursor is moved up;

and in which method when an operator instructs downward movement of the cursor in the active window;

the system automatically operates to determine whether or not the cursor has reached a row next to the bottom boundary row of the active window and to determine whether or not there is a window below the active window, and when the determinations are positive;

the system automatically performs an up-scrolling operation upon the active window until the bottom row of the card image displayed in the active window reaches the row next to a bottom boundary row of the active window, when said cursor is moved down;

and the system automatically moves down the bottom boundary row of the active window after the bottom row of the card image displayed in the active window reaches the row next to the bottom boundary row of the active window, when said cursor is moved down.

2. A method as set forth in claim 1, further comprising the step of changing card data of the card image displayed in the active window belonging to the same box.

3. A method as set forth in claim 1, further comprising the steps of:-

changing the active window into a non-active window whilst leaving unchanged cursor relative coordinates in a card image belonging to a box;

changing another window into an active window while transforming cursor relative coordinates in a card image belonging to another box into absolute coordinates in said display unit; and

displaying the cursor at the said absolute coordinates in said display unit.

4. A method as set forth in claim 3, further comprising performing a scrolling operation upon the active window so as to display the cursor in the display unit, when the cursor is not displayed in the active window.

5. A method as set forth in claim 1, further comprising:-

displaying a corresponding box name at a boundary row of a window;

displaying a corresponding page number at a boundary row of a window which displays the corresponding page of card image;

renewing the box name in response to a change of box; and

renewing the page number in response to a change of card image.

**Patentansprüche**

1. Verfahren zur Steuerung einer Vielzahl von Fenstern, die Grenzreihen zwischen sich haben und längsweise auf einer Anzeigeeinheit angezeigt werden, von denen jedes genannte Fenster einen Teil einer Seite eines Kartenbildes anzeigt, welches zu einem Kasten eines Kartenbild-Datenverarbeitungssystems gehört, welches Kartenbild gemeinsame Kartenmodusdaten für Kartenbilder umfaßt, die zu demselben Kasten gehören, und individuelle Kartendaten für jedes Kartenbild, bei welchem Verfahren dann,

wenn die Bedienungsperson eine Aufwärtsbewegung des Cursors in dem aktiven Fenster befiehlt, das aktive Fenster dasjenige Fenster ist, in welchem der Cursor angeordnet ist:-

das System automatisch arbeitet, um zu bestimmen, ob der Cursor eine Reihe direkt neben der oberen Grenzreihe des aktiven Fensters erreicht hat oder nicht, und um zu bestimmen, ob es oberhalb eines aktiven Fensters ein Fenster gibt oder nicht, und dann, wenn die Bestimmungen positiv sind;

das System automatisch einen abwärtsrollenden Betrieb auf das aktive Fenster durchführt, bis die erste Reihe eines Kartenbildes, das in dem aktiven Fenster gezeigt ist, die Reihe direkt neben einer oberen Grenzreihe des aktiven Fensters erreicht, wenn der genannte Cursor nach oben bewegt wird;

und das System automatisch die obere Grenzreihe des aktiven Fensters nach oben bewegt, nachdem die erste Reihe des Kartenbildes, das in dem aktiven Fenster gezeigt wird, die Reihe direkt neben der oberen Grenzreihe des aktiven Fensters erreicht, wenn der Cursor nach oben bewegt wird;

und bei welchem Verfahren dann, wenn die Bedienungsperson eine Abwärtsbewegung des Cursors in dem aktiven Fenster befiehlt;

das System automatisch arbeitet, um zu bestimmen, ob der Cursor eine Reihe direkt neben der unteren Grenzreihe des aktiven Fensters erreicht hat oder nicht, und um zu bestimmen, ob es ein Fenster unterhalb des aktiven Fensters gibt oder nicht, und wenn die Bestimmungen positiv sind;

das System automatisch einer nach oben rollenden Betrieb auf das aktiven Fensters durchführt, bis die untere Reihe des Kartenbildes, das in einem aktiven Fenster gezeigt wird, die Reihe direkt neben der unteren Grenzreihe des aktiven Fensters erreicht, wenn der Cursor nach unten bewegt wird;

und das System automatisch die untere Grenzreihe des aktiven Fensters nach unten bewegt, nachdem die untere Reihe des Kartenbildes, das in dem aktiven Fenster gezeigt wird, die Reihe direkt neben der unteren Grenzreihe des aktiven Fensters erreicht, wenn der genannte Cursor nach unten bewegt wird.

2. Verfahren nach Anspruch 1, ferner mit dem Schritt der Änderung von Kartendaten des in dem aktiven Fenster gezeigten Kartenbildes, das zu demselben Kasten gehört.

3. Verfahren nach Anspruch 1, ferner mit den folgenden Schritten:-

Änderung des aktiven Fensters in ein nichtaktives Fenster, während die relativen Cursorkoordinaten in einem Kartenbild, das zu einem Kasten gehört, unverändert bleiben;

Änderung eines anderen Fensters in ein aktives Fenster, während die relativen Cursorkoordinaten in einem Kartenbild, das zu einem anderen Kasten gehört, in absolute Koordinaten in der genannten Anzeigeeinheit transformiert werden; und

Anzeigen des Cursors an den genannten absoluten Koordinaten in der genannten Anzeigeeinheit.

4. Verfahren nach Anspruch 3, ferner mit der Durchführung eines Rollbetriebs auf ein aktives Fenster, um so den Cursor in de Anzeigeeinheit anzuzeigen, wenn der Cursor in dem aktiven Fenster nicht angezeigt ist.

5. Verfahren nach Anspruch 1, ferner mit:-

Anzeigen eines entsprechenden Kastennamens an einer Grenzreihe eines Fensters;

Anzeigen einer entsprechenden Seitennummer an der Grenzreihe eines Fensters, welches die entsprechende Seite eines Kartenbildes zeigt;

Erneuerung des Kastennamens in Abhängigkeit von einer Änderung des Kastens; und

Erneuerung der Seitennummer in Abhängigkeit von einer Änderung des Kartenbildes.

**Revendications**

1. Un procédé pour commander un ensemble de fenêtres entre lesquelles se trouvent des rangées limites, et qui sont visualisées longitudinalement sur une unité de visualisation, chacune de ces fenêtres visualisant une partie d'une page d'une image de fiche appartenant à une boîte d'un système de traitement de données d'images de fiches, cette image de fiche comprenant des données de mode de carte communes pour des images de fiches appartenant à la même boîte, et des données de fiche individuelles pour chaque image de fiche, dans lequel:

lorsqu'un opérateur commande un mouvement ascendant du curseur dans la fenêtre active, la fenêtre active étant la fenêtre dans laquelle se trouve le curseur:

le système fonctionne automatiquement de façon à déterminer si le curseur a atteint ou non une rangée adjacente à la rangée limite supérieure de la fenêtre active, et à déterminer s'il existe ou non une fenêtre au-dessus d'une fenêtre active, et lorsque les déterminations sont positives,

le système effectue automatiquement une opération de défilement en direction descendante sur la fenêtre active, jusqu'à ce que la première rangée d'une image de fiche qui est visualisée dans la fenêtre active atteigne la rangée adjacente à une rangée limite supérieure de la fenêtre active, lorsque le curseur est déplacé ves le haut;

et le système fait automatiquement monter la rangée limite supérieure de la fenêtre active après que la première rangée de l'image de fiche qui est visualisée dans la fenêtre active a atteint la rangée adjacente à la rangée limite supérieure de la fenêtre active, lorsque le curseur est déplacé vers le haut;

et dans lequel lorsqu'un opérateur commande un mouvement descendant du curseur dans la fenêtre active,

le système fonctionne automatiquement de façon à déterminer si le curseur a atteint ou non une rangée adjacente à la rangée limite inférieure de la fenêtre active, et à déterminer s'il existe ou non une fenêtre au-dessous de la fenêtre active, et lorsque les déterminations sont positives,

le système effectue automatiquement une opération de défilement en direction montante sur la fenêtre active, jusqu'à ce que la rangée inférieure de l'image de fiche qui est visualisée dans la fenêtre active atteigne la rangée adjacente à une rangée limite inférieure de la fenêtre active, lorsque le curseur est déplacé vers le bas,

et le système fait descendre automatiquement la rangée limite inférieure de la fenêtre active après que la rangée inférieure de l'image de fiche qui est visualisée dans la fenêtre active a atteint la rangée adjacente à la rangée limite inférieure de la fenêtre active, lorsque le curseur est déplacé vers le bas.

2. Un procédé selon la revendication 1, comprenant en outre l'opération qui consiste à changer des données de fiche de l'image de fiche qui est visualisée dans la fenêtre active appartenant à la même boîte.

3. Un procédé selon la revendication 1, comprenant en outre les opérations suivantes:

on transforme la fenêtre active en une fenêtre non active, tout en laissant inchangées les coordonnées relatives du curseur dans une image de fiche appartenant à une boîte;

on transforme une autre fenêtre en une fenêtre active tout en transformant en coordonnées absolues dans l'unité de visualisation des coordonnées relatives du curseur dans une image de fiche appartenant à une autre boîte; et

on visualise le curseur aux coordonnées absolues précitées dans l'unité de visualisation.

4. Un procédé selon la revendication 3, comprenant en outre l'accomplissement d'une opération de défilement sur la fenêtre active, de façon à visualiser le curseur dans l'unité de visualisation, lorsque le curseur n'est pas visualisé dans la fenêtre active.

5. Un procédé selon la revendication 1, comprenant en outre les opérations suivantes:

on visualise un nom de boîte correspondant, dans une rangée limite d'une fenêtre;

on visualise un numéro de page correspondant, dans une rangée limite d'une fenêtre qui visualise la page d'image de fiche correspondante;

on renouvelle le nom de boîte sous l'effet d'un changement de boîte; et

on renouvelle le numéro de page sous l'effet d'un changement d'image de fiche.

Fig. 1

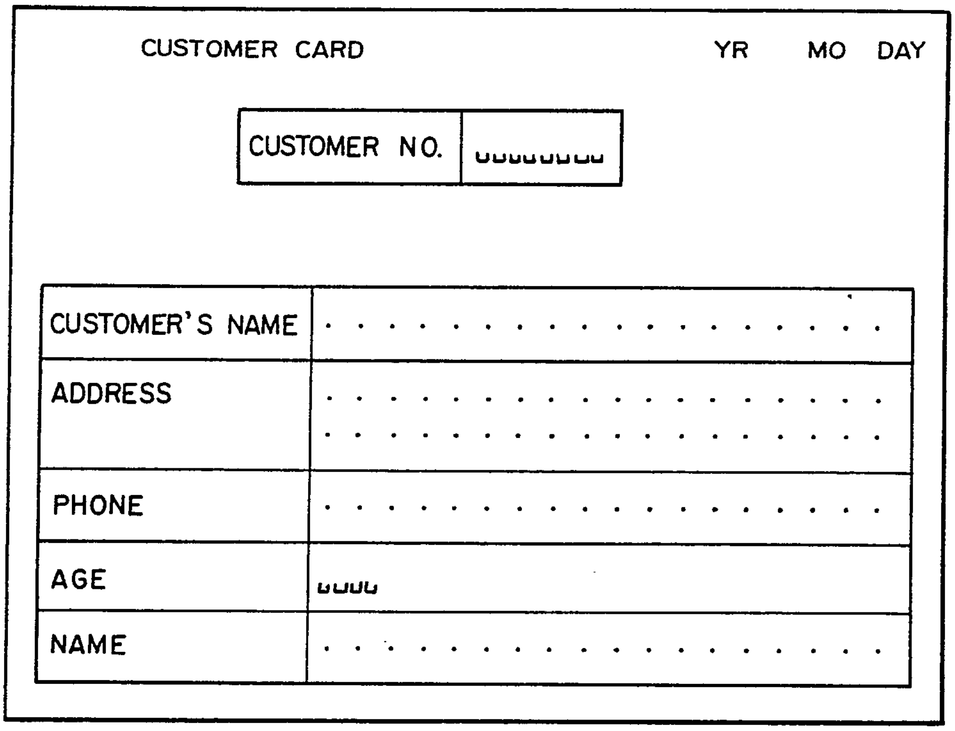
CUSTOMER CARD
YR
MO
DAY
CUSTOMER NO.
CUSTOMER'S NAME
ADDRESS
PHONE
AGE
NAME

Fig. 2

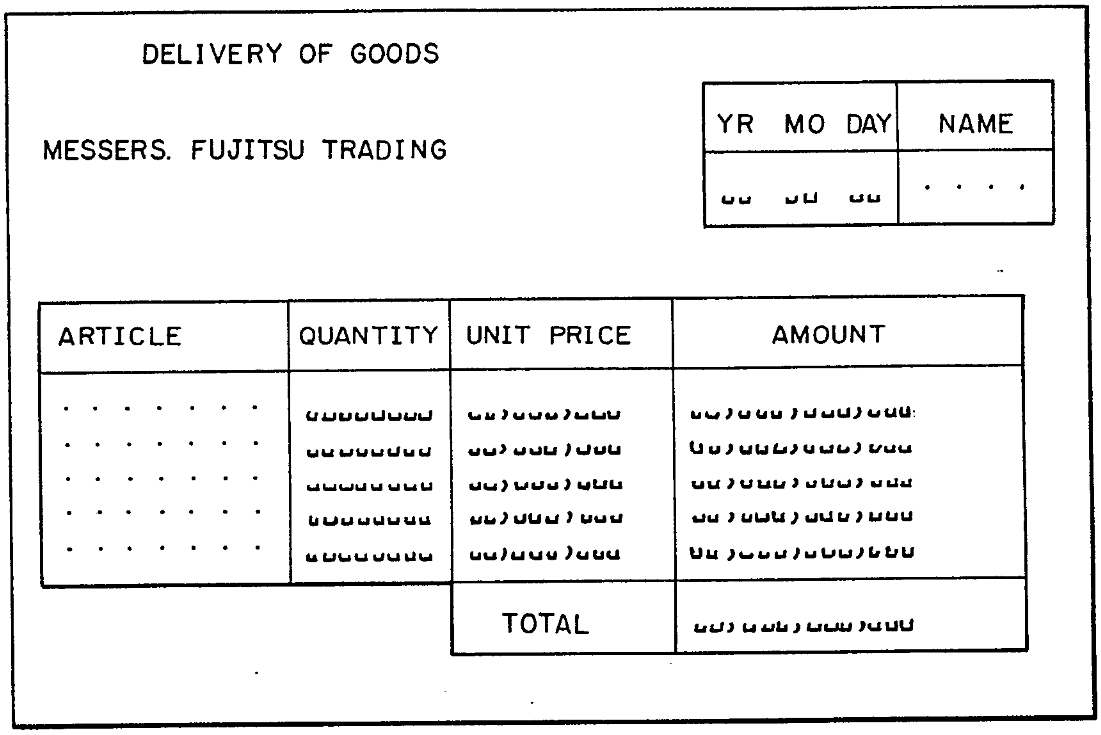
DELIVERY OF GOODS
MESSERS. FUJITSU TRADING
YR MO DAY
NAME
ARTICLE
QUANTITY
UNIT PRICE
AMOUNT
TOTAL

Fig. 3

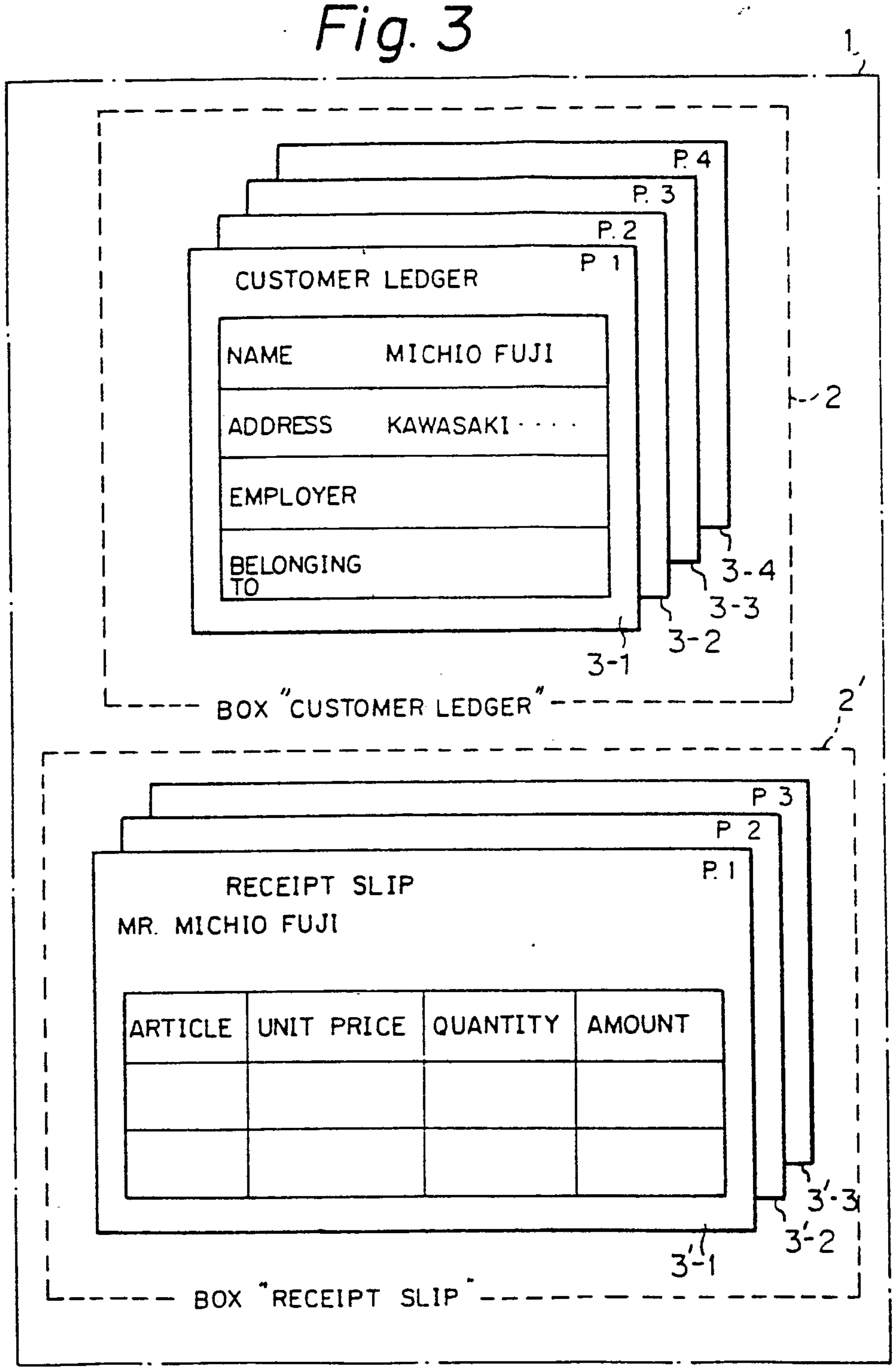
1
2
P 4
P 3
P 2
P 1
CUSTOMER LEDGER
NAME
MICHIO FUJI
ADDRESS
KAWASAKI · · · ·
EMPLOYER
BELONGING TO
3-4
3-3
3-2
3-1
BOX "CUSTOMER LEDGER"
2'
P 3
P 2
P 1
RECEIPT SLIP
MR. MICHIO FUJI
ARTICLE
UNIT PRICE
QUANTITY
AMOUNT
3'-3
3'-2
3'-1
BOX "RECEIPT SLIP"

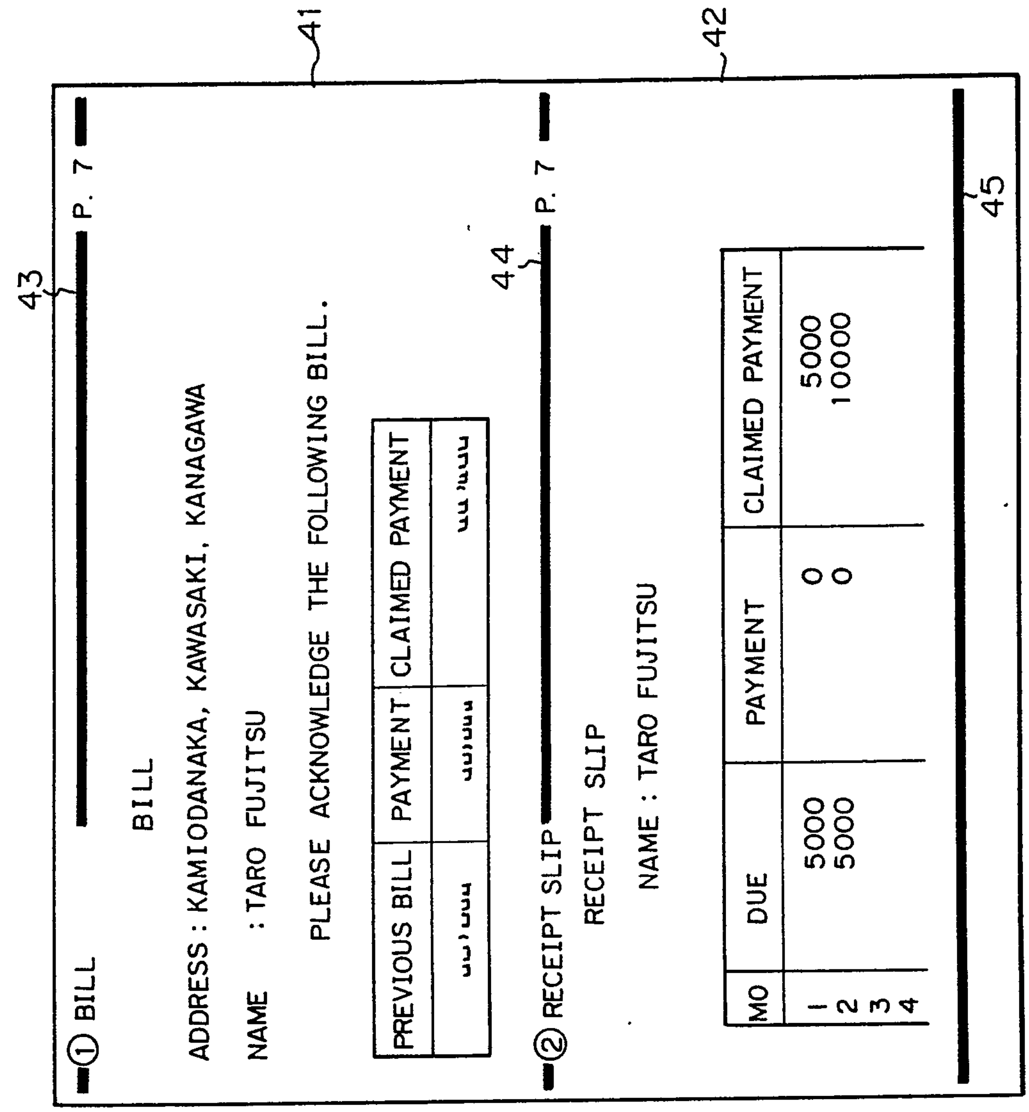
41
42
43
44
45
① BILL
P. 7
BILL
ADDRESS : KAMIODANAKA, KAWASAKI, KANAGAWA
NAME : TARO FUJITSU
PLEASE ACKNOWLEDGE THE FOLLOWING BILL.
PREVIOUS BILL
PAYMENT
CLAIMED PAYMENT
② RECEIPT SLIP
P. 7
RECEIPT SLIP
NAME : TARO FUJITSU
MO
DUE
PAYMENT
CLAIMED PAYMENT
1
2
3
4
5000
5000
0
0
5000
10000

Fig. 4

Fig. 5

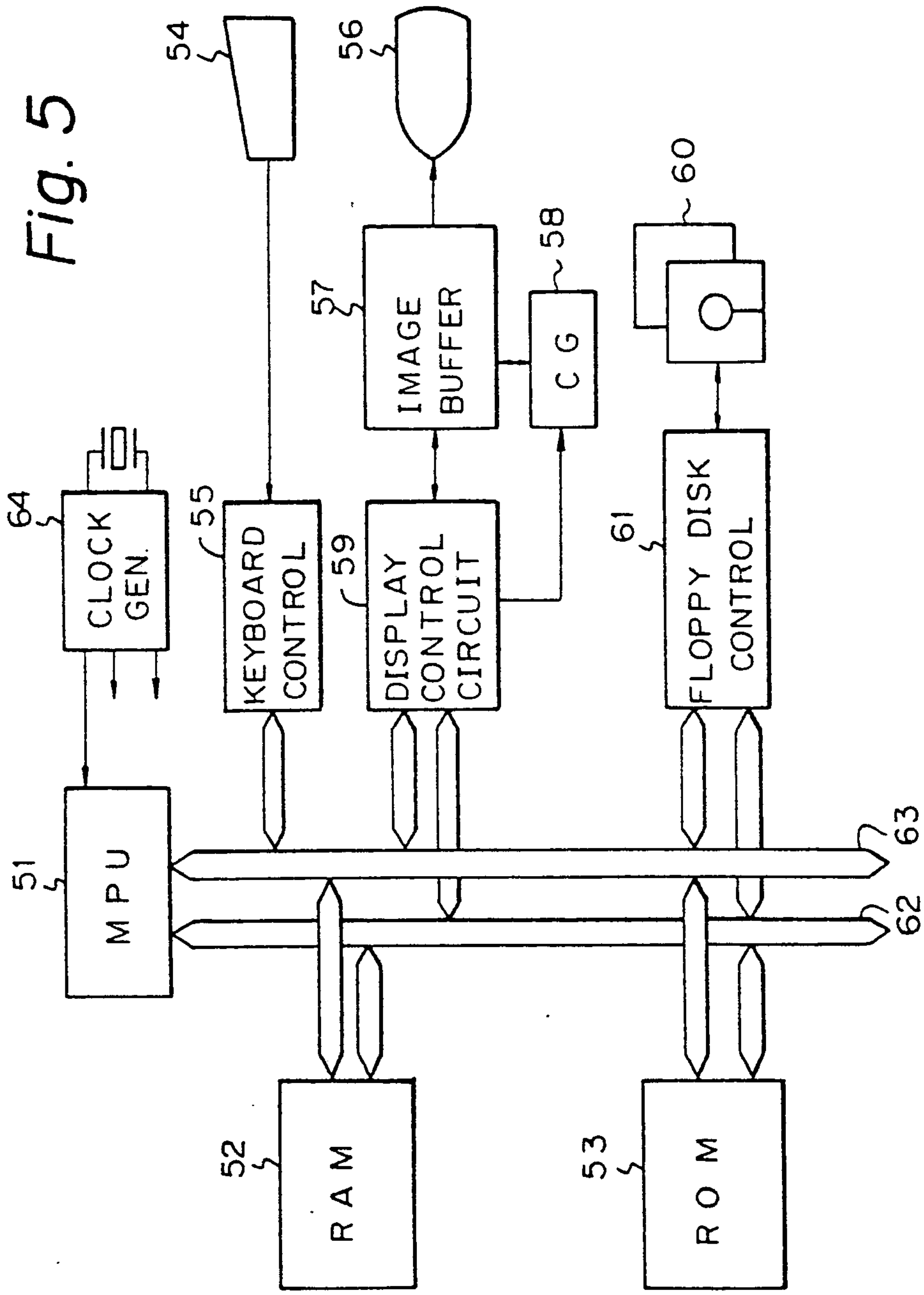
54
56
60
58
57
IMAGE BUFFER
C G
64
CLOCK GEN.
55
KEYBOARD CONTROL
59
DISPLAY CONTROL CIRCUIT
61
FLOPPY DISK CONTROL
51
MPU
63
62
52
RAM
53
ROM

Fig. 6 A

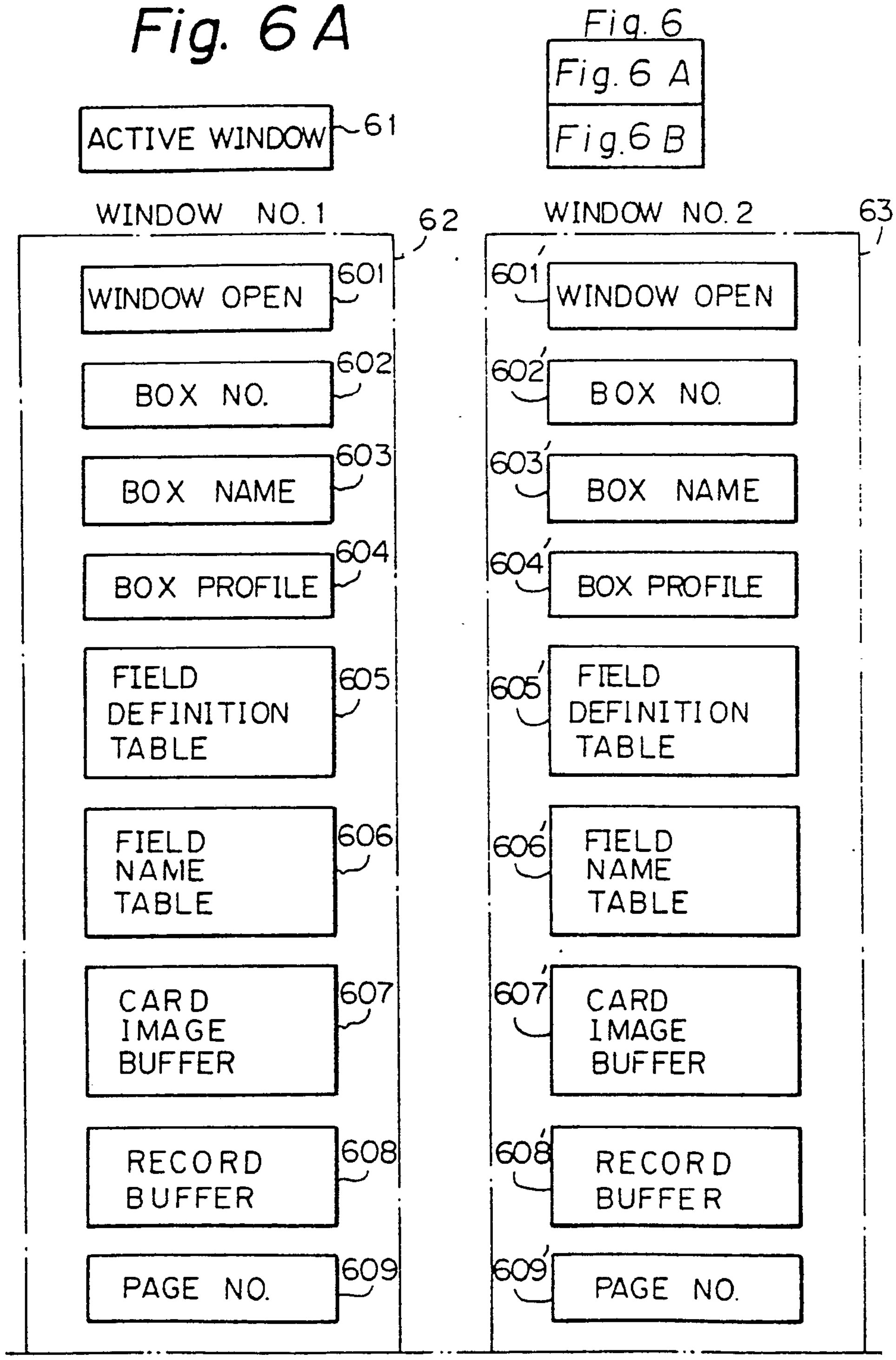
Fig. 6
Fig. 6 A
Fig. 6 B
ACTIVE WINDOW
61
WINDOW NO. 1
62
WINDOW OPEN
601
BOX NO.
602
BOX NAME
603
BOX PROFILE
604
FIELD DEFINITION TABLE
605
FIELD NAME TABLE
606
CARD IMAGE BUFFER
607
RECORD BUFFER
608
PAGE NO.
609
WINDOW NO. 2
63
601'
WINDOW OPEN
602'
BOX NO.
603'
BOX NAME
604'
BOX PROFILE
605'
FIELD DEFINITION TABLE
606'
FIELD NAME TABLE
607'
CARD IMAGE BUFFER
608'
RECORD BUFFER
609'
PAGE NO.

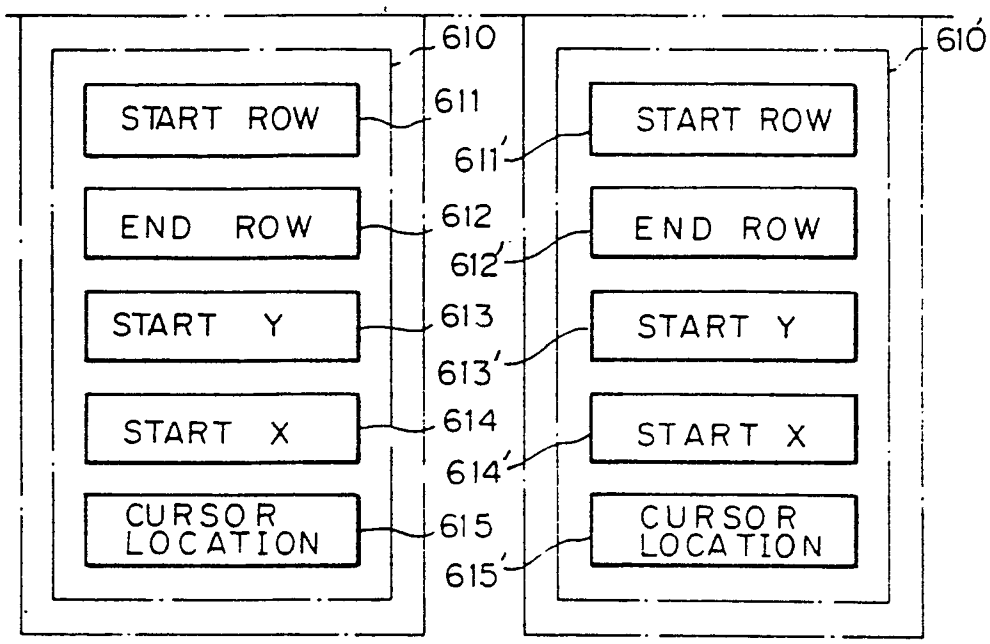
START ROW
END ROW
START Y
START X
CURSOR LOCATION
START ROW
END ROW
START Y
START X
CURSOR LOCATION
610
611
612
613
614
615
610'
611'
612'
613'
614'
615'

*Fig. 6B*

Fig. 7

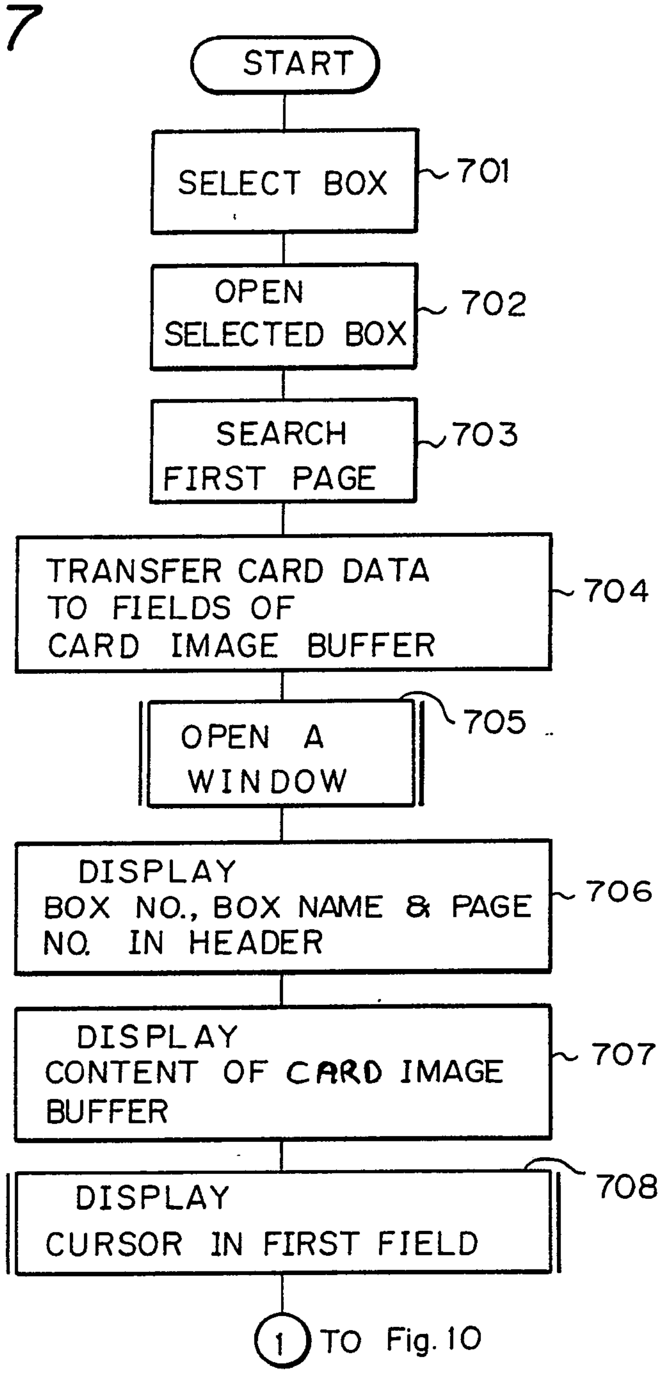
START
SELECT BOX
701
OPEN
SELECTED BOX
702
SEARCH
FIRST PAGE
703
TRANSFER CARD DATA
TO FIELDS OF
CARD IMAGE BUFFER
704
OPEN A
WINDOW
705
DISPLAY
BOX NO., BOX NAME & PAGE
NO. IN HEADER
706
DISPLAY
CONTENT OF CARD IMAGE
BUFFER
707
DISPLAY
CURSOR IN FIRST FIELD
708
1
TO Fig. 10

Fig. 8A

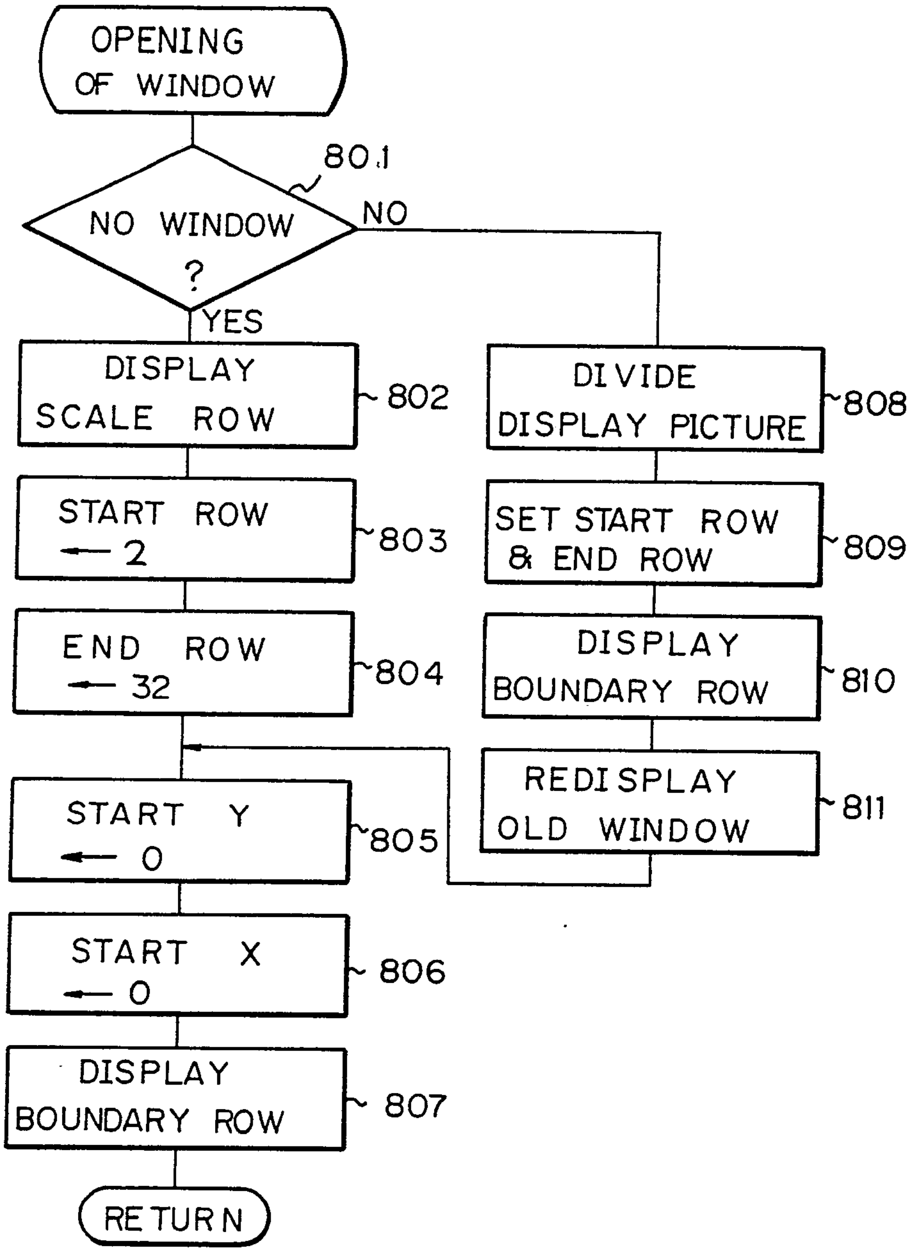
OPENING OF WINDOW
NO WINDOW ?
801
NO
YES
DISPLAY SCALE ROW
802
START ROW ← 2
803
END ROW ← 32
804
START Y ← 0
805
START X ← 0
806
DISPLAY BOUNDARY ROW
807
RETURN
DIVIDE DISPLAY PICTURE
808
SET START ROW & END ROW
809
DISPLAY BOUNDARY ROW
810
REDISPLAY OLD WINDOW
811

Fig. 8 B

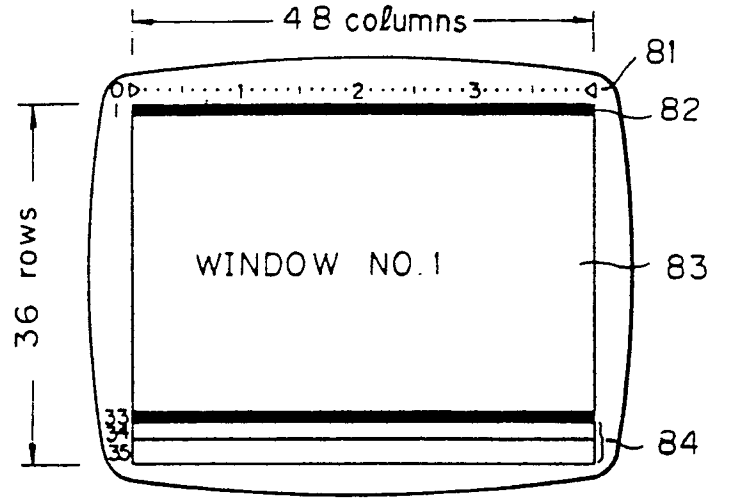
48 columns
81
82
0
1
2
3
1
36 rows
WINDOW NO. 1
83
33
34
35
84

Fig. 8 C

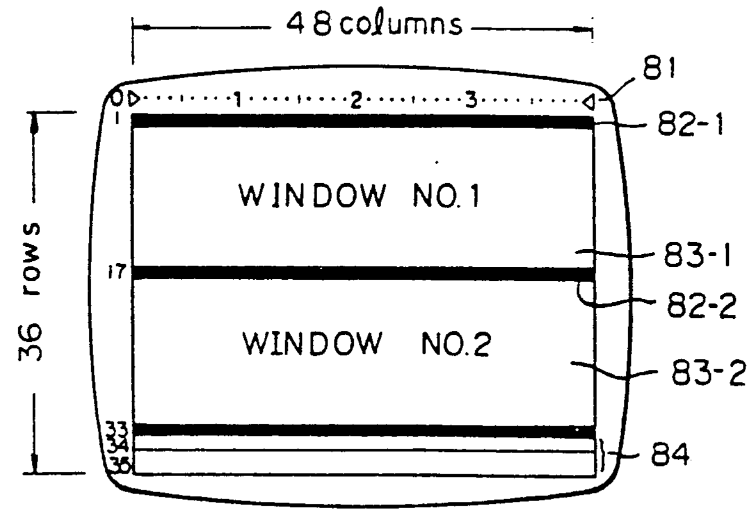
48 columns
81
82-1
0
1
2
3
1
36 rows
WINDOW NO. 1
83-1
17
82-2
WINDOW NO. 2
83-2
33
34
35
84

*Fig. 8 D*

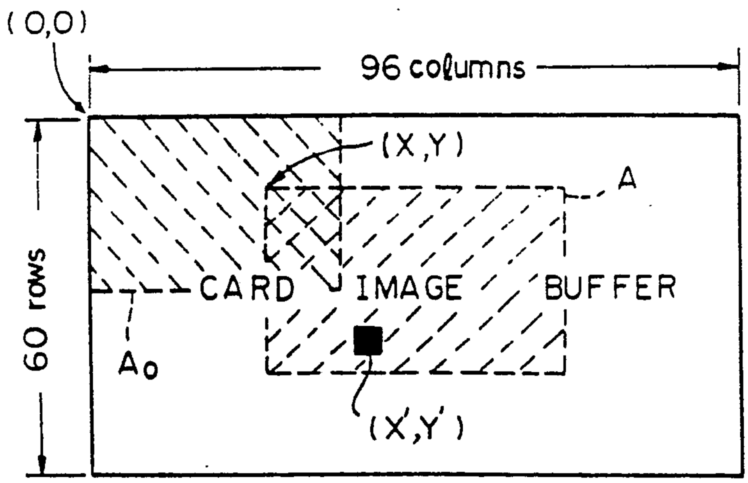

Fig. 9

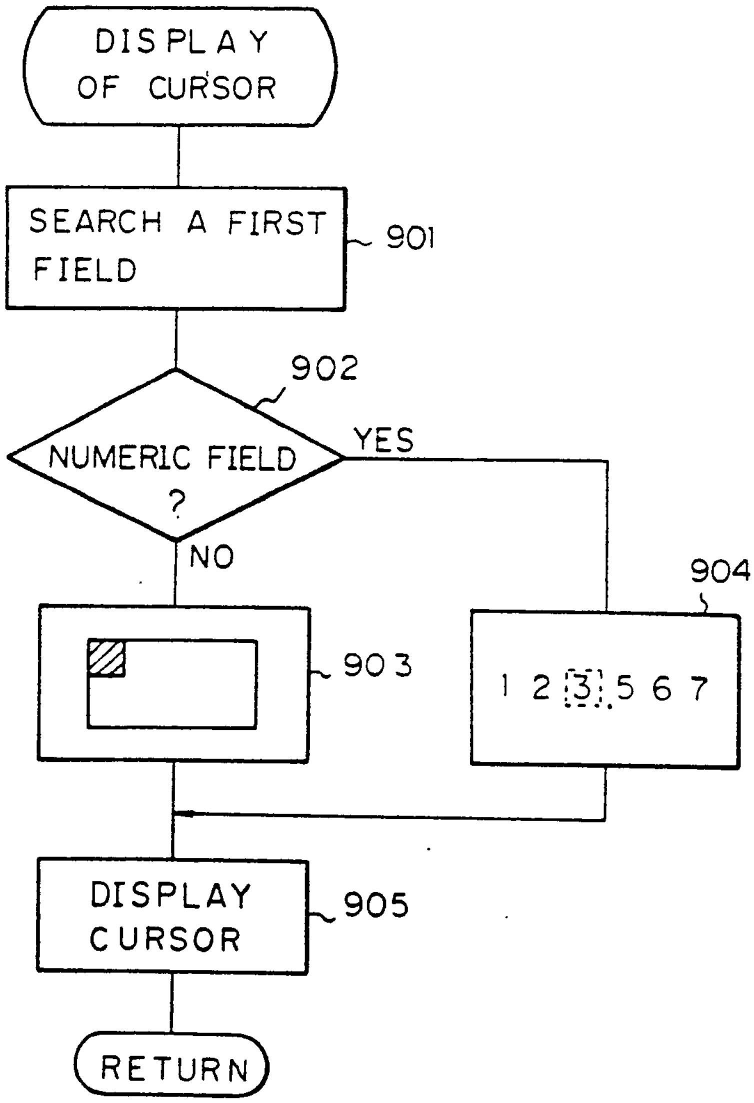
DISPLAY OF CURSOR
SEARCH A FIRST FIELD
901
902
NUMERIC FIELD ?
YES
NO
903
904
1 2 3 5 6 7
DISPLAY CURSOR
905
RETURN

Fig. 10A

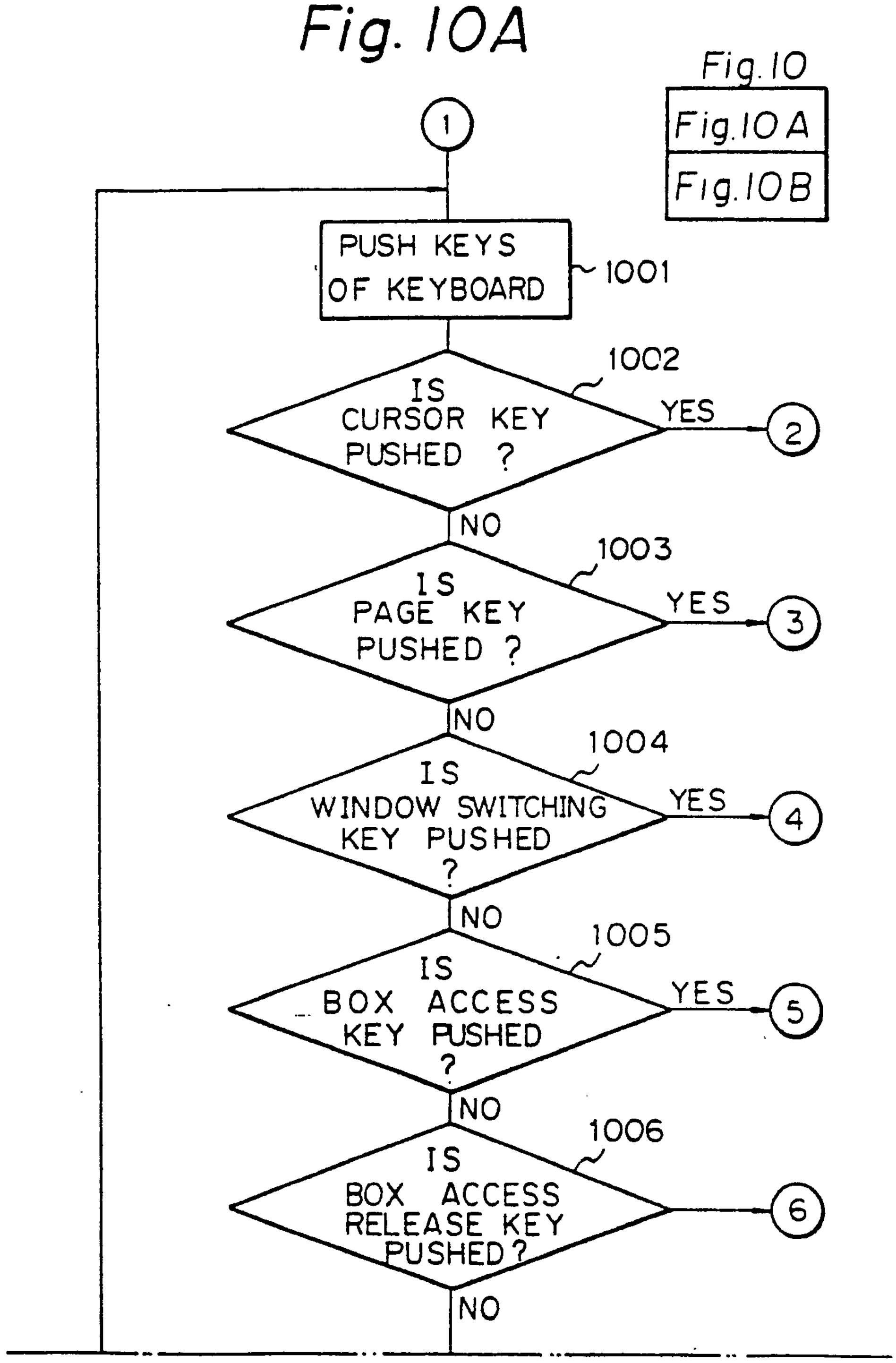
Fig.10
Fig.10A
Fig.10B
1
PUSH KEYS OF KEYBOARD
1001
1002
IS CURSOR KEY PUSHED ?
YES
2
NO
1003
IS PAGE KEY PUSHED ?
YES
3
NO
1004
IS WINDOW SWITCHING KEY PUSHED ?
YES
4
NO
1005
IS BOX ACCESS KEY PUSHED ?
YES
5
NO
1006
IS BOX ACCESS RELEASE KEY PUSHED ?
6
NO

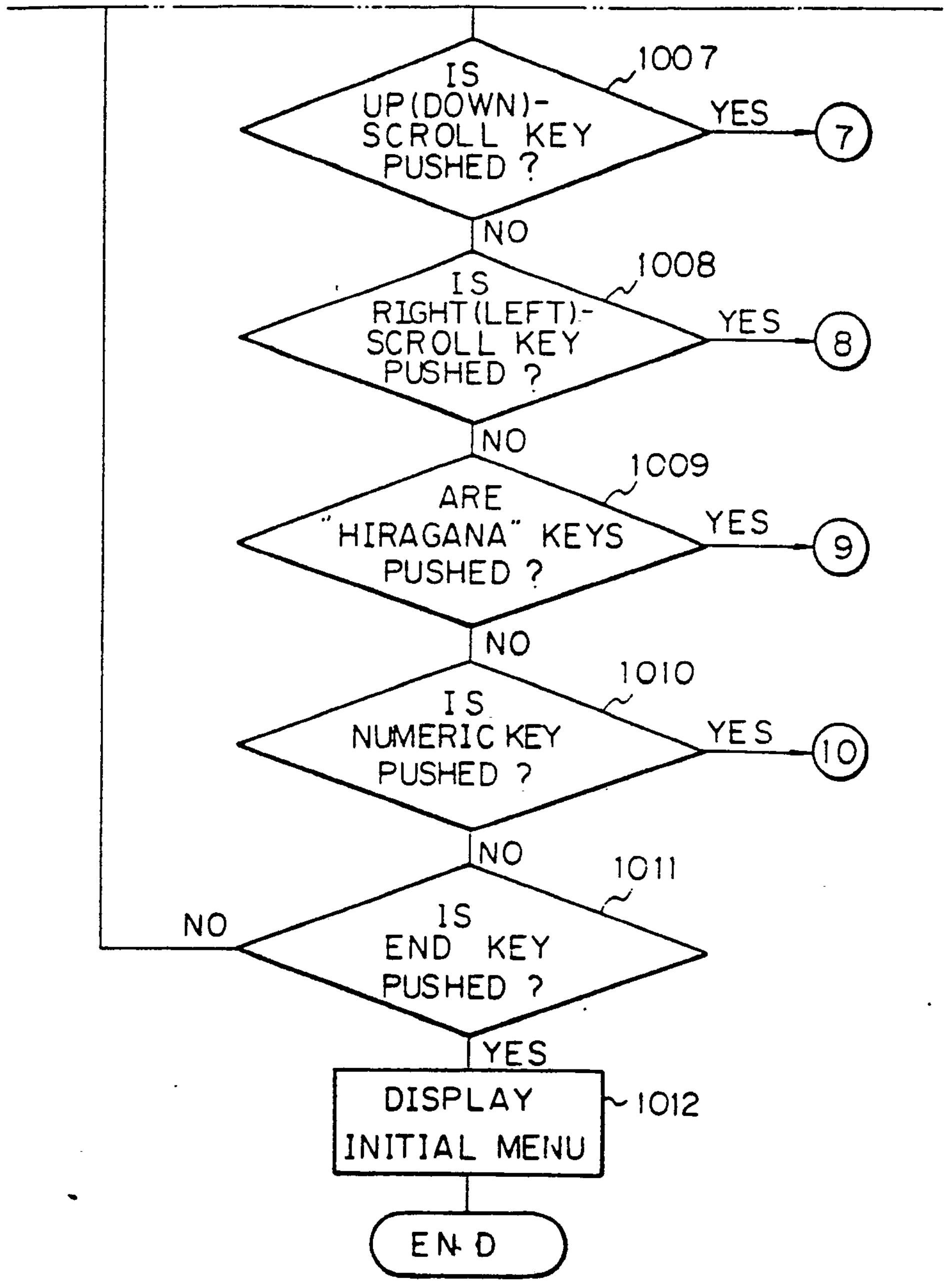
IS UP(DOWN)-SCROLL KEY PUSHED ?
1007
YES
7
NO
IS RIGHT(LEFT)-SCROLL KEY PUSHED ?
1008
YES
8
NO
ARE "HIRAGANA" KEYS PUSHED ?
1009
YES
9
NO
IS NUMERIC KEY PUSHED ?
1010
YES
10
NO
IS END KEY PUSHED ?
1011
NO
YES
DISPLAY INITIAL MENU
1012
END

Fig.10B

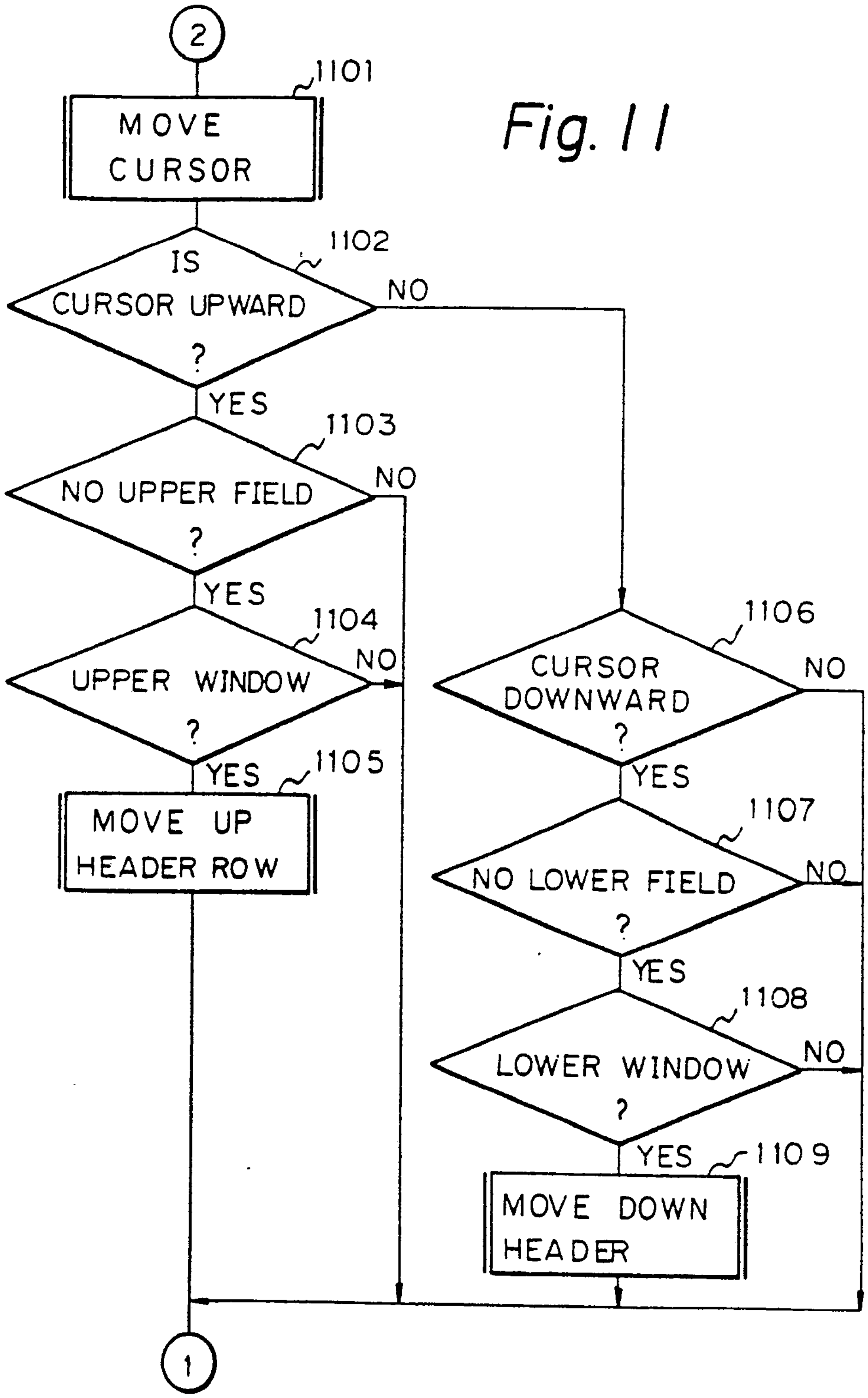
2
1101
MOVE CURSOR
1102
IS CURSOR UPWARD ?
NO
YES
1103
NO UPPER FIELD ?
NO
YES
1104
UPPER WINDOW ?
NO
YES
1105
MOVE UP HEADER ROW
1106
CURSOR DOWNWARD ?
NO
YES
1107
NO LOWER FIELD ?
NO
YES
1108
LOWER WINDOW ?
NO
YES
1109
MOVE DOWN HEADER
1

Fig. 11

Fig. 12

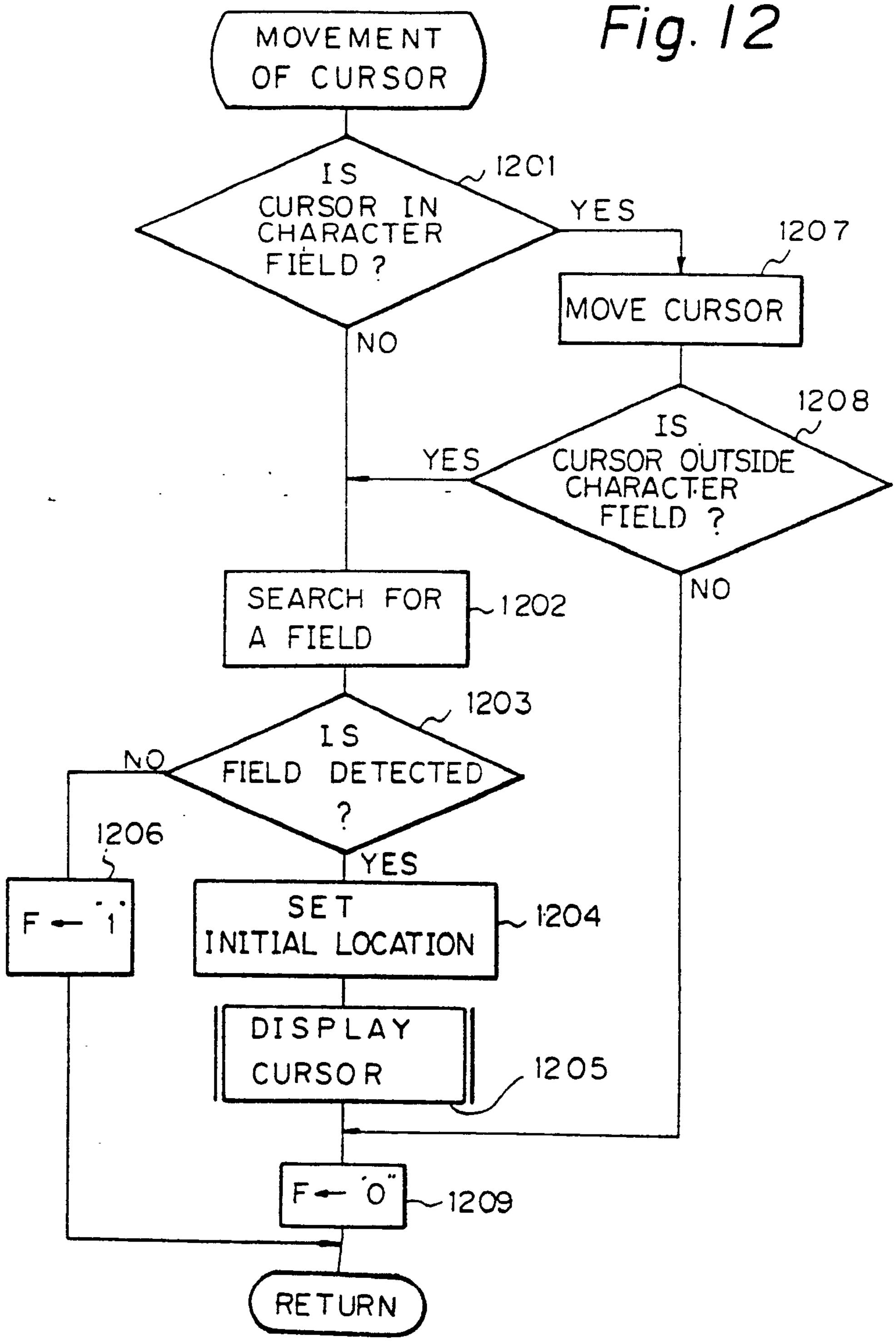
MOVEMENT OF CURSOR
IS CURSOR IN CHARACTER FIELD ?
1201
YES
NO
1207
MOVE CURSOR
1208
IS CURSOR OUTSIDE CHARACTER FIELD ?
YES
NO
SEARCH FOR A FIELD
1202
1203
IS FIELD DETECTED ?
NO
YES
1206
F ← "1"
SET INITIAL LOCATION
1204
DISPLAY CURSOR
1205
F ← "0"
1209
RETURN

Fig. 13A-1

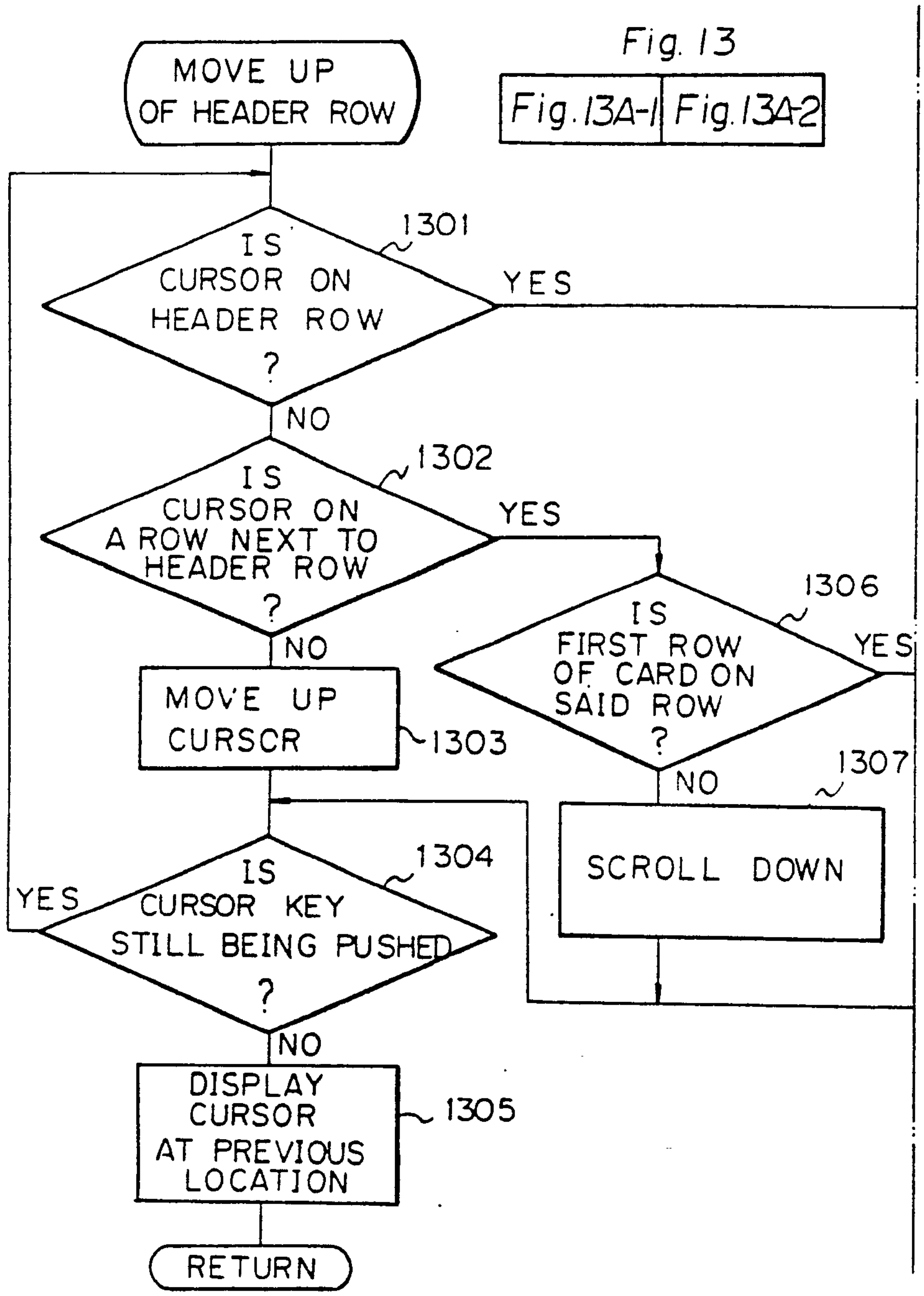
Fig. 13
Fig. 13A-1
Fig. 13A-2
MOVE UP OF HEADER ROW
IS CURSOR ON HEADER ROW ?
1301
YES
NO
IS CURSOR ON A ROW NEXT TO HEADER ROW ?
1302
YES
NO
IS FIRST ROW OF CARD ON SAID ROW ?
1306
YES
NO
MOVE UP CURSOR
1303
SCROLL DOWN
1307
IS CURSOR KEY STILL BEING PUSHED ?
1304
YES
NO
DISPLAY CURSOR AT PREVIOUS LOCATION
1305
RETURN

Fig. 13A-2

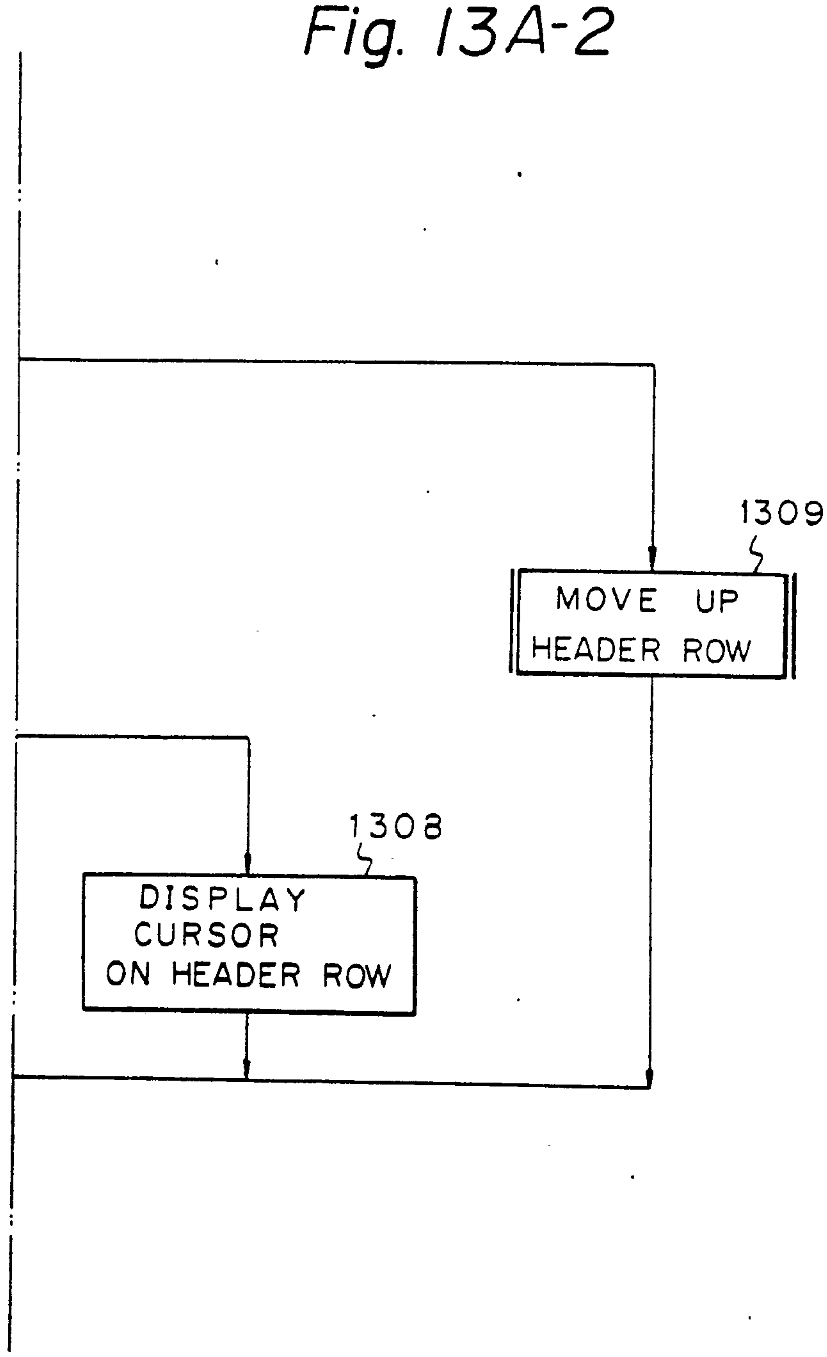

Fig. 13B-1

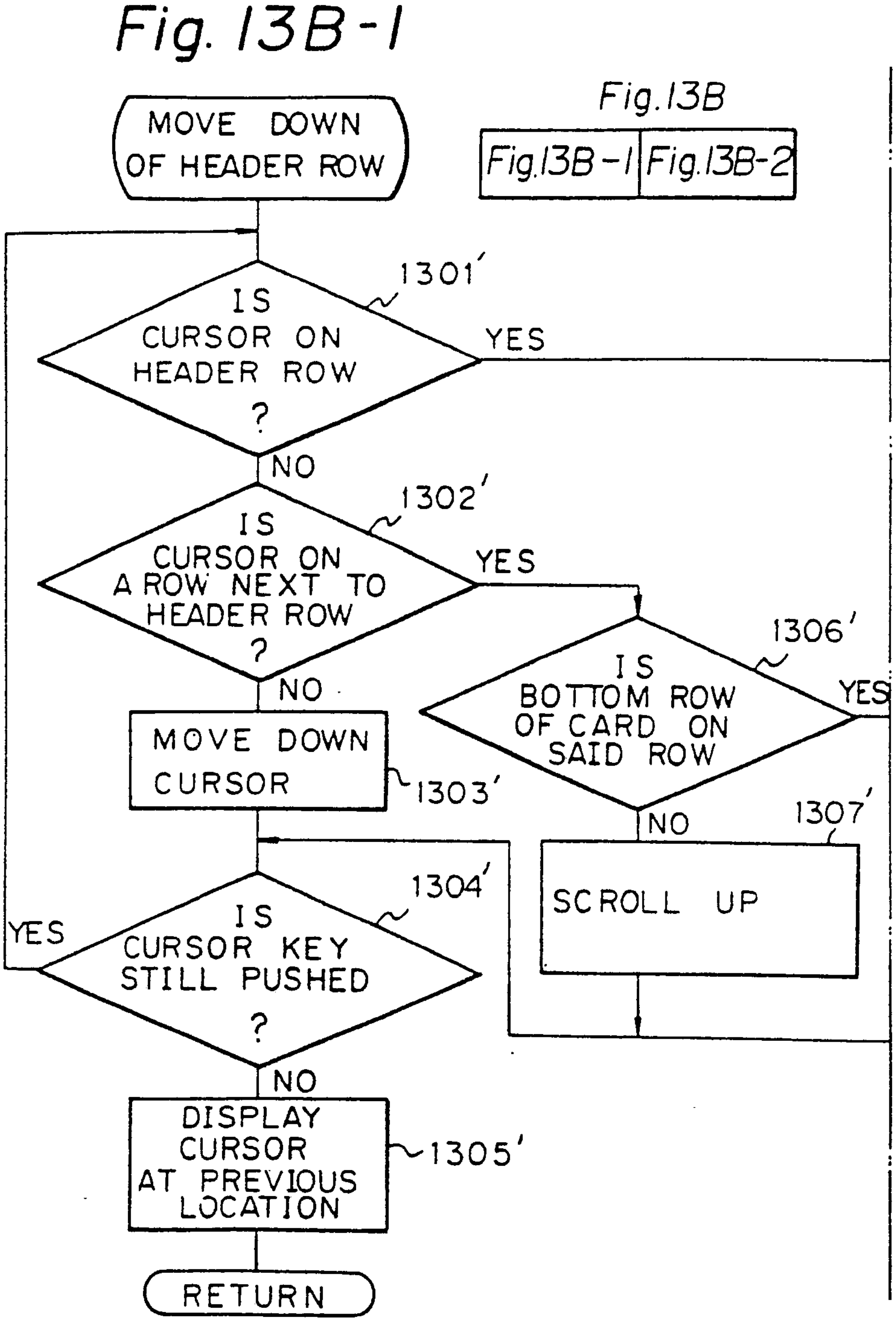
Fig. 13B
Fig. 13B-1
Fig. 13B-2
MOVE DOWN OF HEADER ROW
1301'
IS CURSOR ON HEADER ROW ?
YES
NO
1302'
IS CURSOR ON A ROW NEXT TO HEADER ROW ?
YES
NO
1306'
IS BOTTOM ROW OF CARD ON SAID ROW
YES
NO
MOVE DOWN CURSOR
1303'
1307'
SCROLL UP
1304'
IS CURSOR KEY STILL PUSHED ?
YES
NO
DISPLAY CURSOR AT PREVIOUS LOCATION
1305'
RETURN

Fig. 13B-2

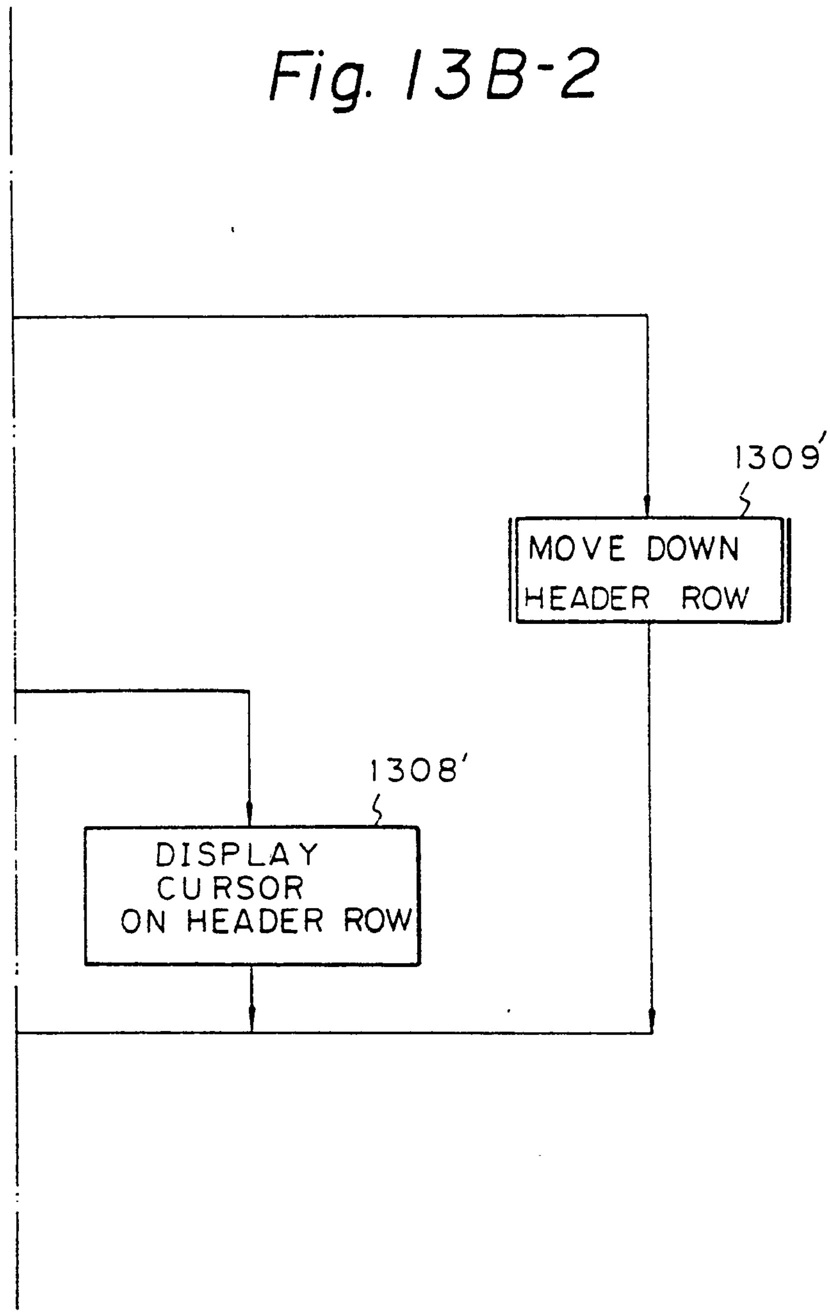

Fig. 13C

Fig. 13D

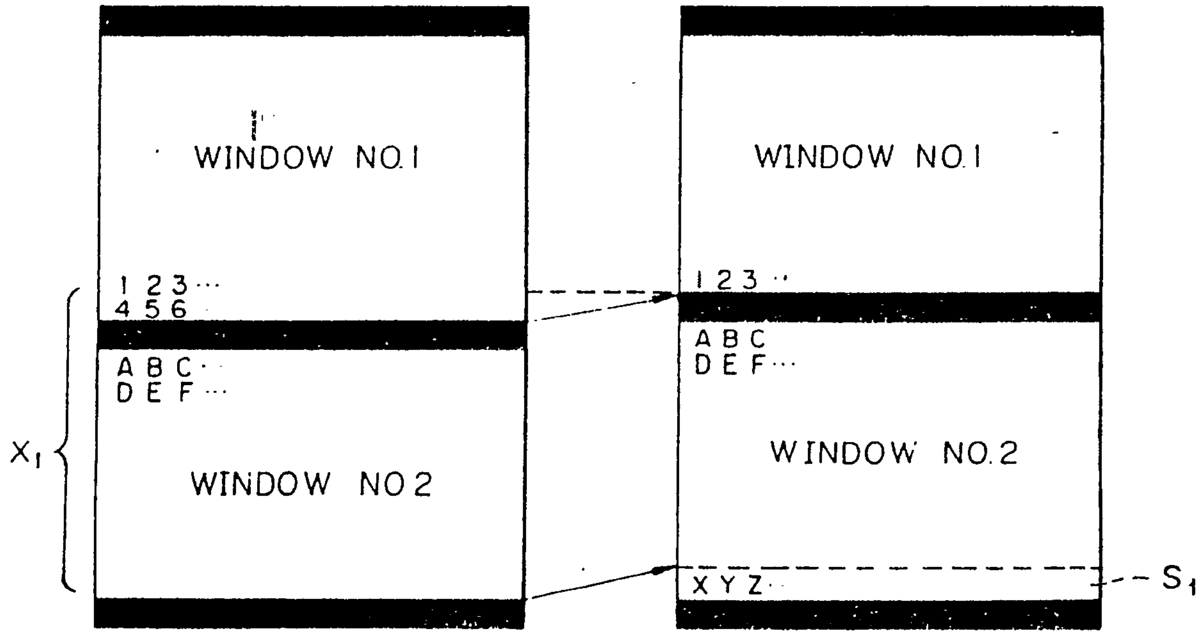

Fig. 13 E

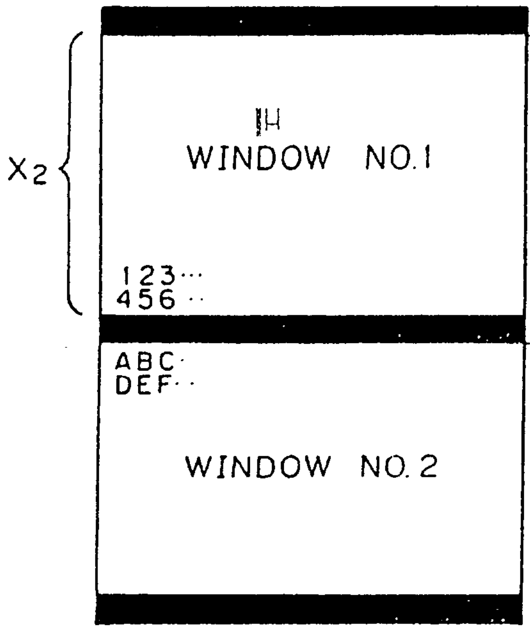


Fig. 13 F

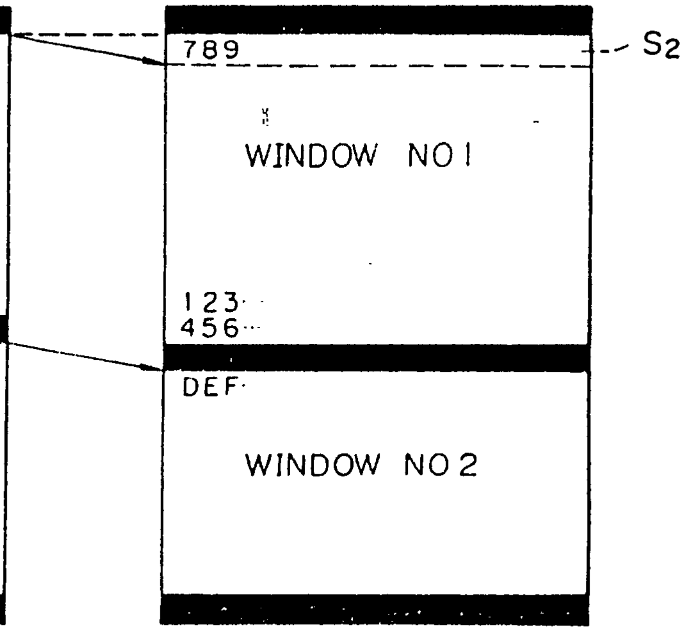

Fig. 14

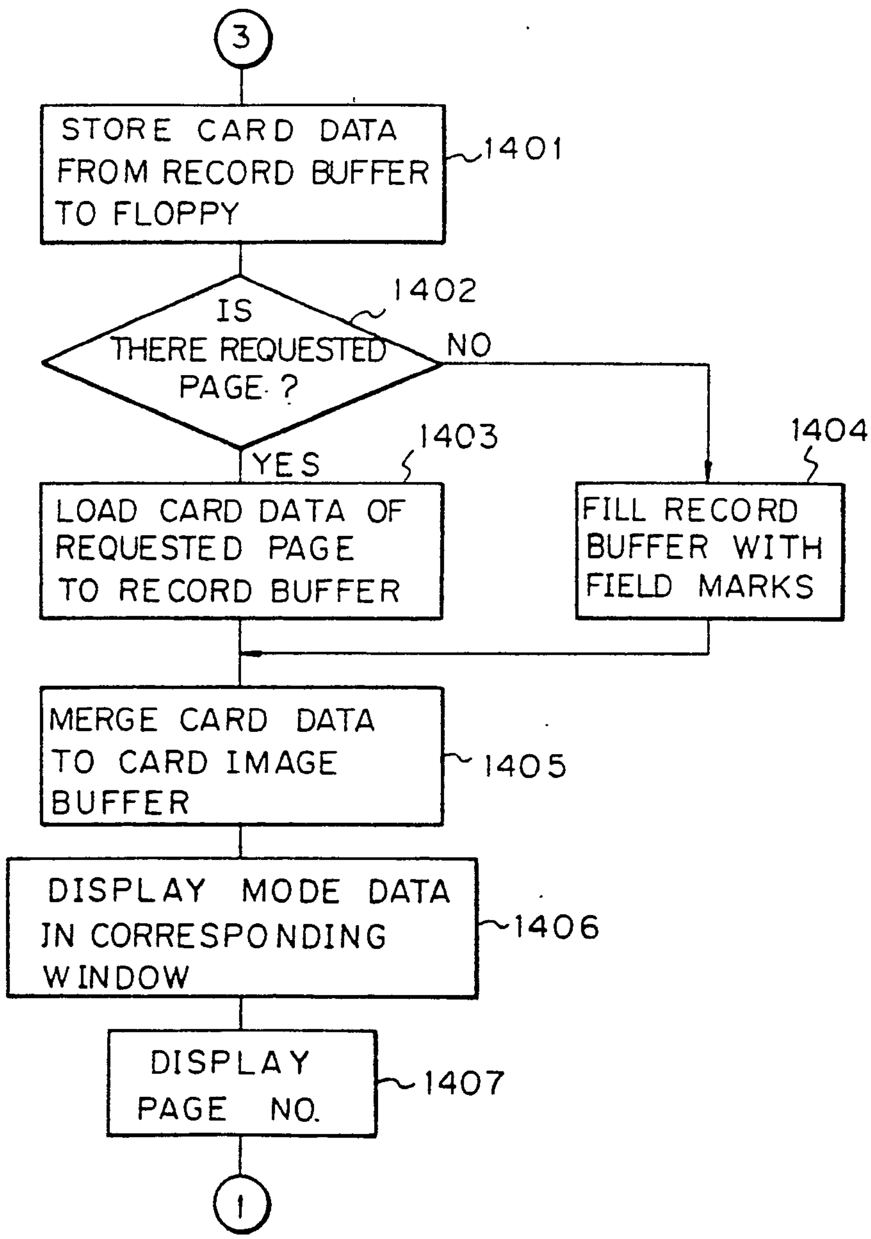
3
STORE CARD DATA FROM RECORD BUFFER TO FLOPPY
1401
IS THERE REQUESTED PAGE ?
1402
NO
YES
1403
1404
LOAD CARD DATA OF REQUESTED PAGE TO RECORD BUFFER
FILL RECORD BUFFER WITH FIELD MARKS
MERGE CARD DATA TO CARD IMAGE BUFFER
1405
DISPLAY MODE DATA IN CORRESPONDING WINDOW
1406
DISPLAY PAGE NO.
1407
1

Fig. 15A

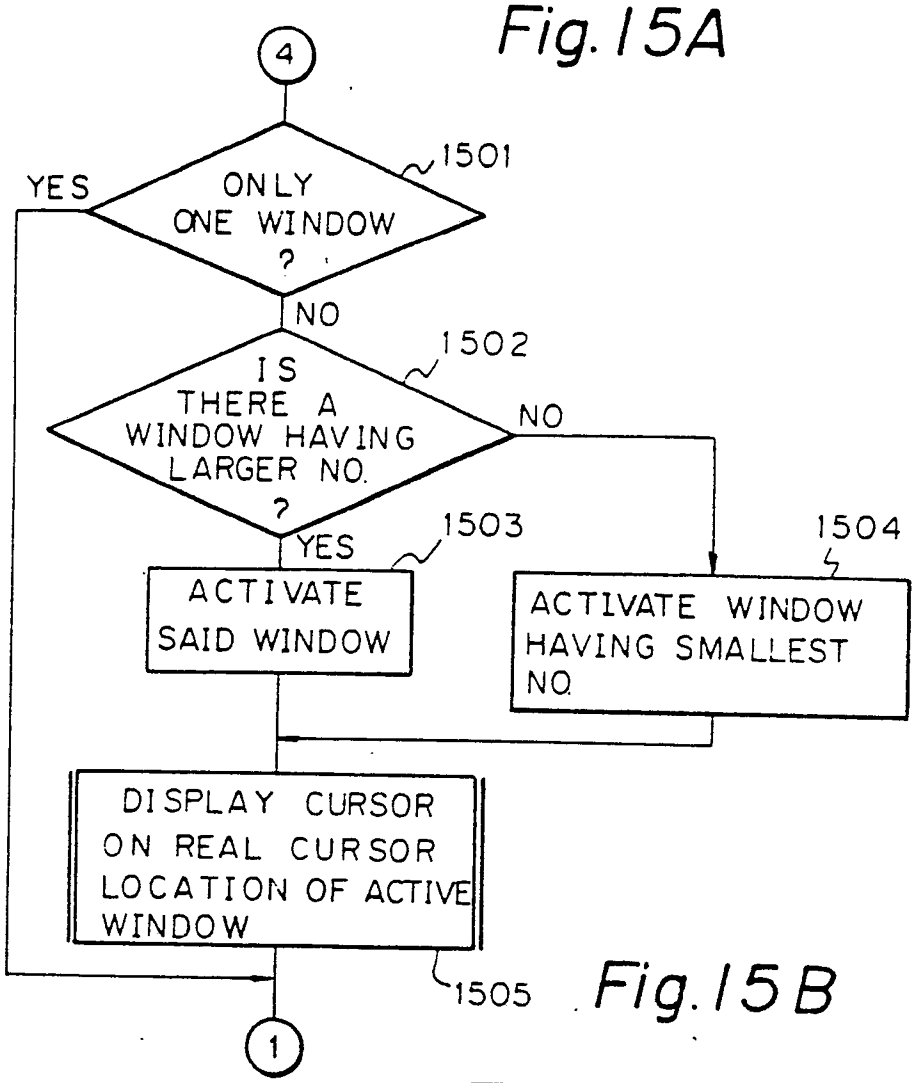


Fig. 15B

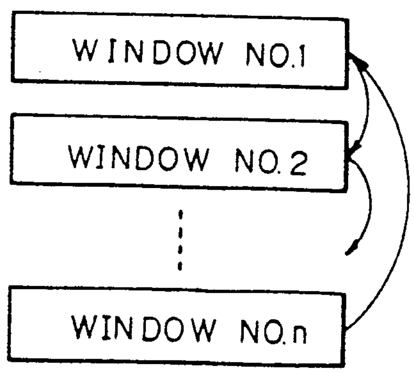

Fig. 16A-1

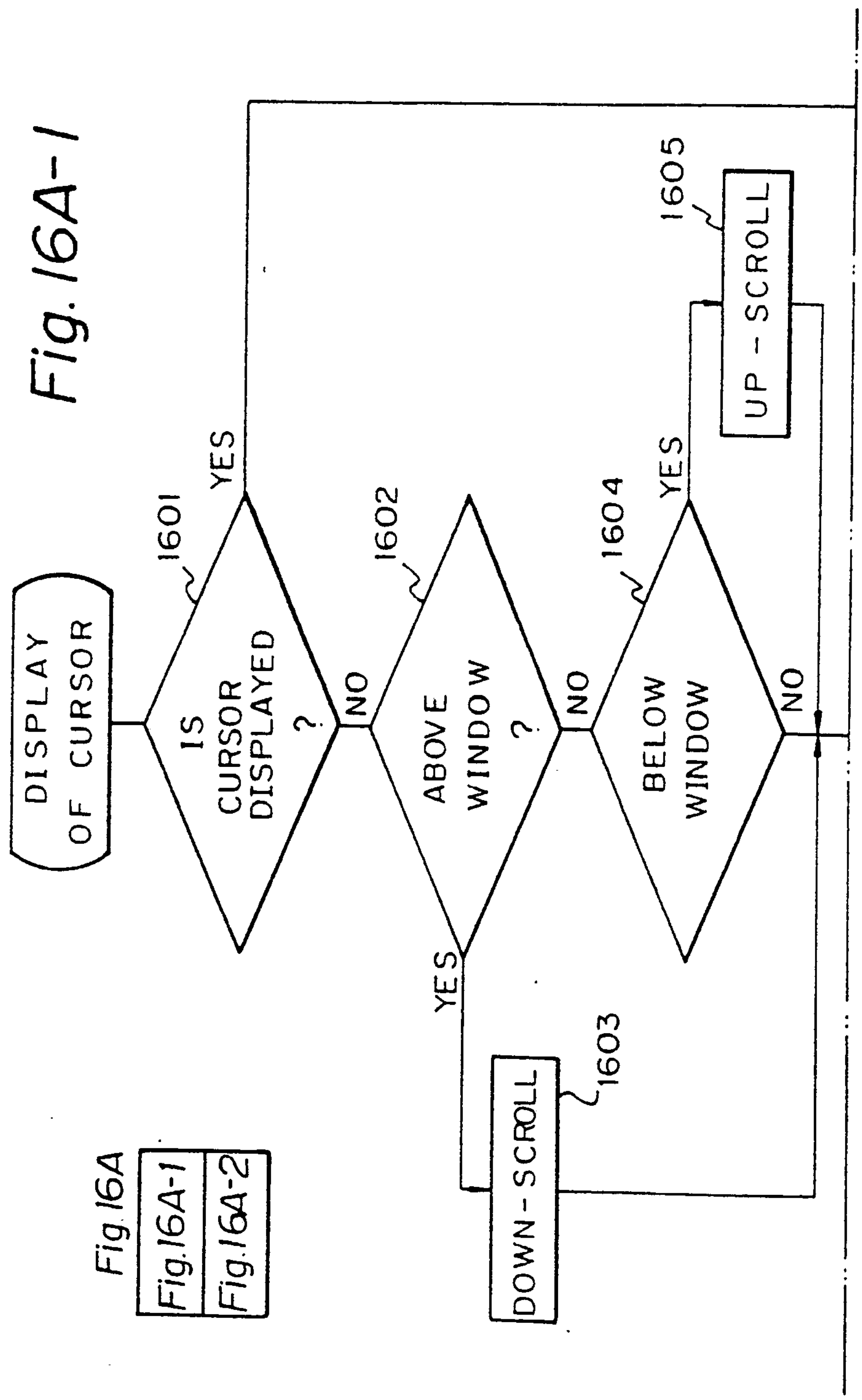
DISPLAY OF CURSOR
1601
IS CURSOR DISPLAYED ?
YES
NO
1602
ABOVE WINDOW ?
YES
NO
1603
DOWN-SCROLL
1604
BELOW WINDOW
YES
NO
1605
UP-SCROLL
Fig.16A
Fig.16A-1
Fig.16A-2

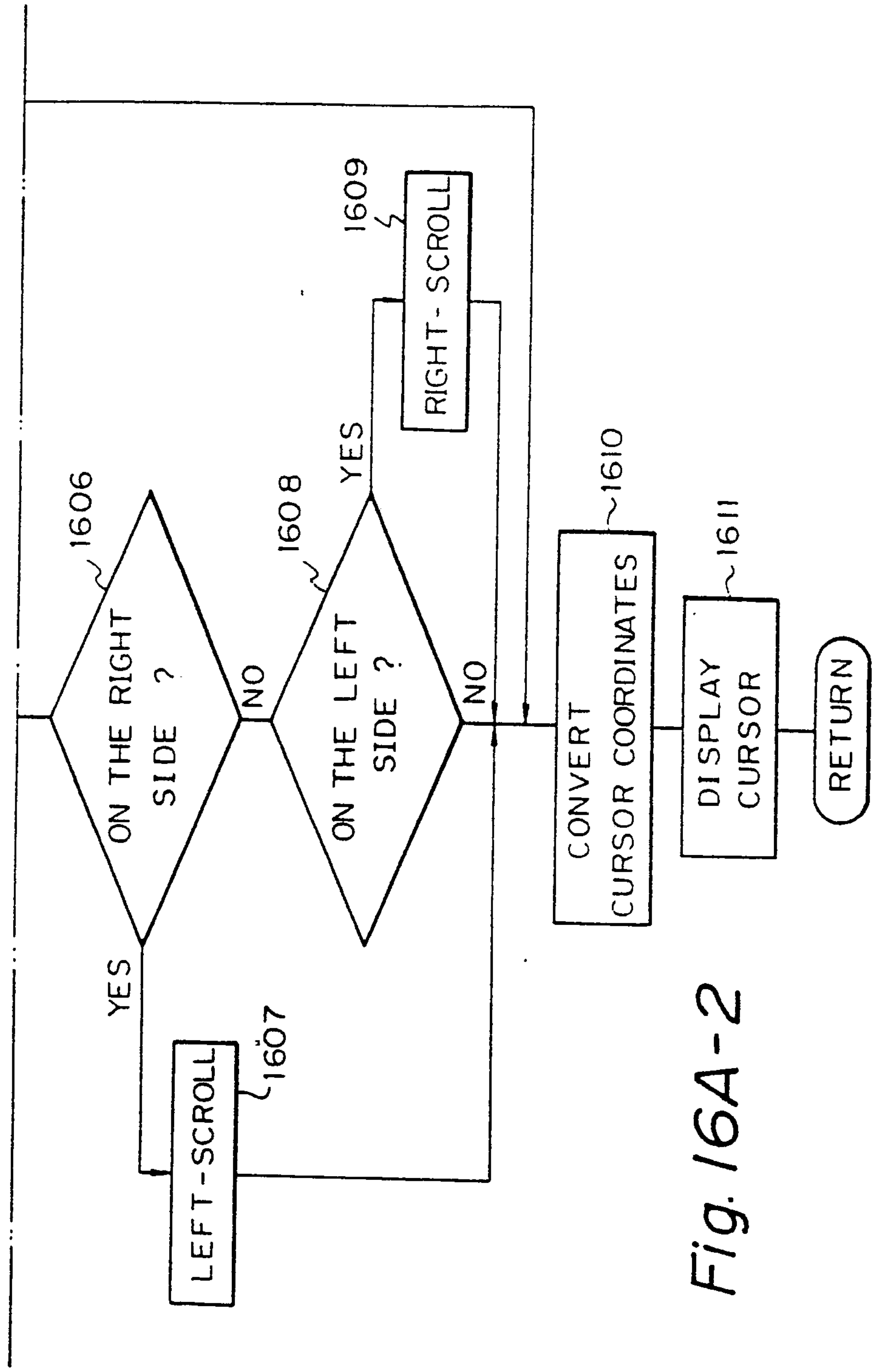
ON THE RIGHT SIDE ?
1606
YES
LEFT-SCROLL
1607
NO
ON THE LEFT SIDE ?
1608
YES
RIGHT-SCROLL
1609
NO
CONVERT CURSOR COORDINATES
1610
DISPLAY CURSOR
1611
RETURN

Fig. 16A-2

*Fig. 16 B*

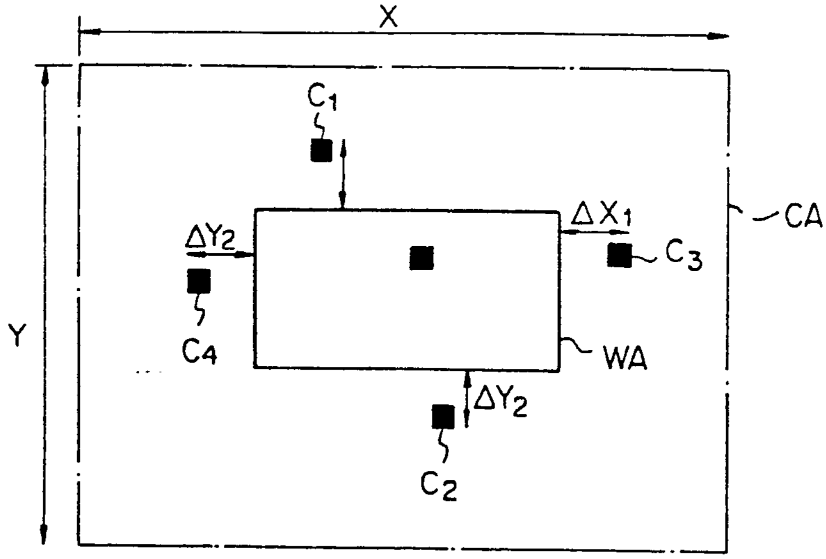

Fig. 17

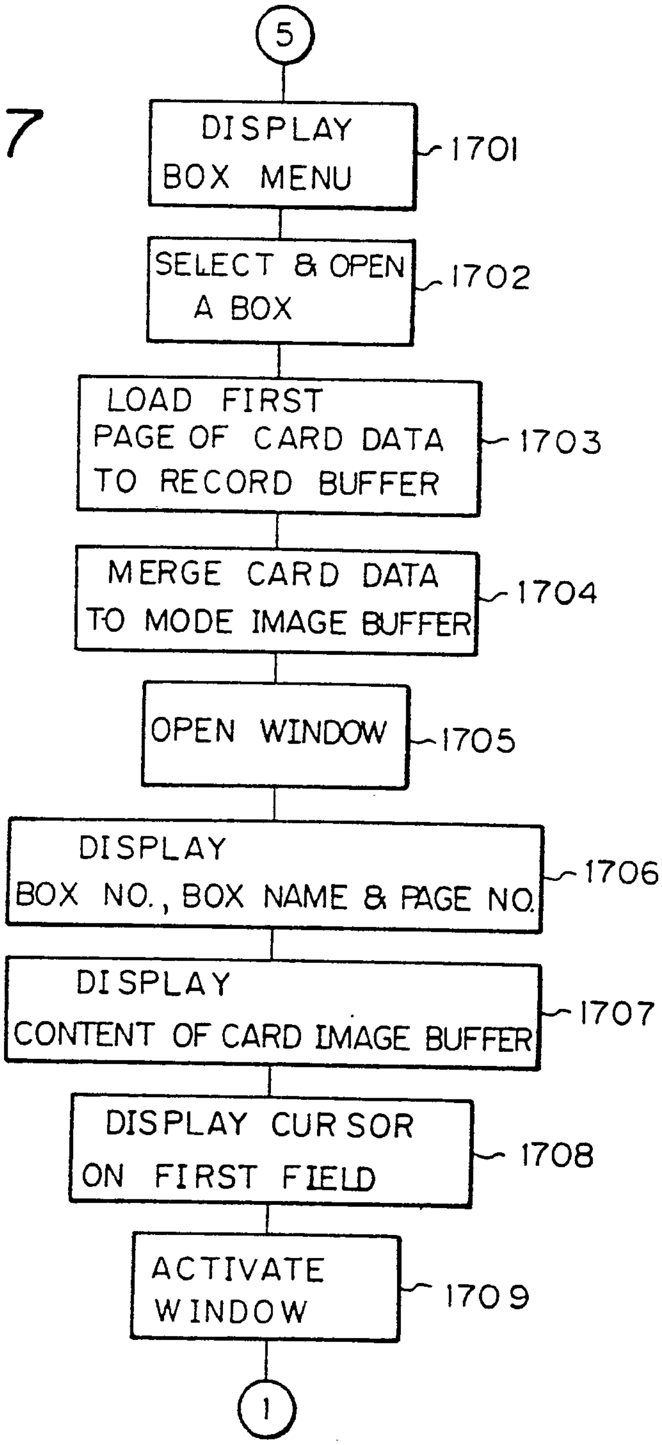
5
DISPLAY BOX MENU
1701
SELECT & OPEN A BOX
1702
LOAD FIRST PAGE OF CARD DATA TO RECORD BUFFER
1703
MERGE CARD DATA TO MODE IMAGE BUFFER
1704
OPEN WINDOW
1705
DISPLAY BOX NO., BOX NAME & PAGE NO.
1706
DISPLAY CONTENT OF CARD IMAGE BUFFER
1707
DISPLAY CURSOR ON FIRST FIELD
1708
ACTIVATE WINDOW
1709
1

Fig. 18

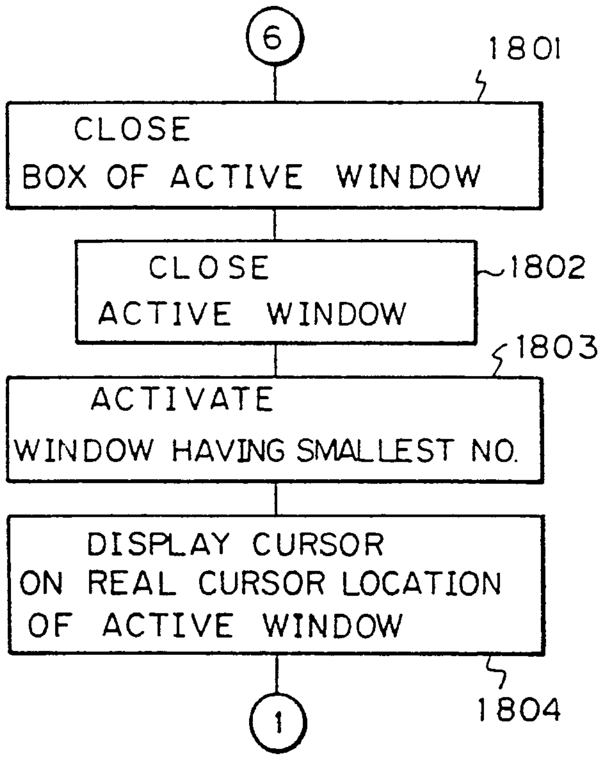
6
1801
CLOSE
BOX OF ACTIVE WINDOW
CLOSE
ACTIVE WINDOW
1802
1803
ACTIVATE
WINDOW HAVING SMALLEST NO.
DISPLAY CURSOR
ON REAL CURSOR LOCATION
OF ACTIVE WINDOW
1804
1

Fig. 19

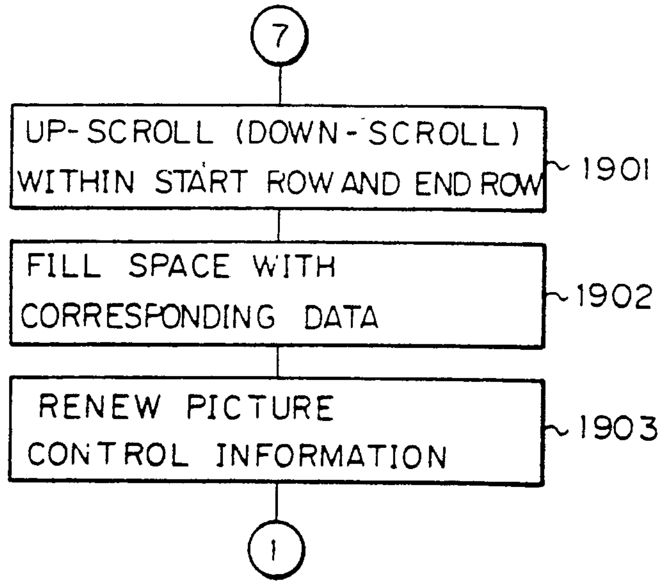
7
UP-SCROLL (DOWN-SCROLL) WITHIN START ROW AND END ROW
1901
FILL SPACE WITH CORRESPONDING DATA
1902
RENEW PICTURE CONTROL INFORMATION
1903
1

Fig. 20

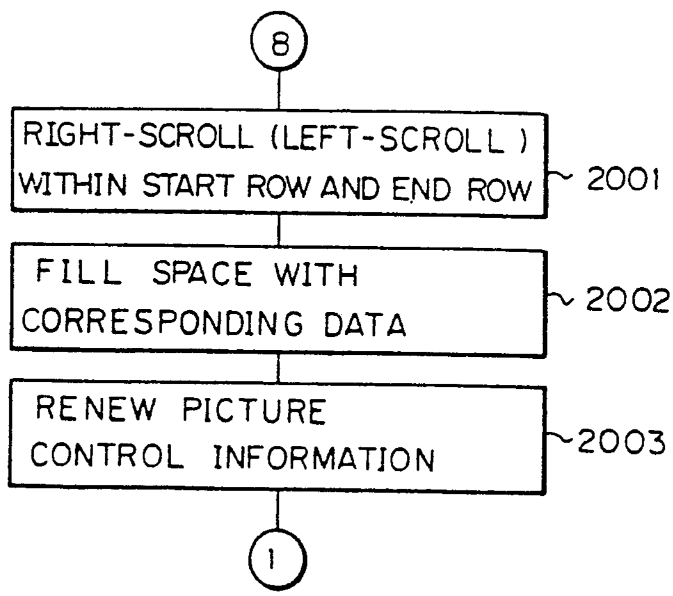
8
RIGHT-SCROLL (LEFT-SCROLL) WITHIN START ROW AND END ROW
2001
FILL SPACE WITH CORRESPONDING DATA
2002
RENEW PICTURE CONTROL INFORMATION
2003
1

Fig. 21

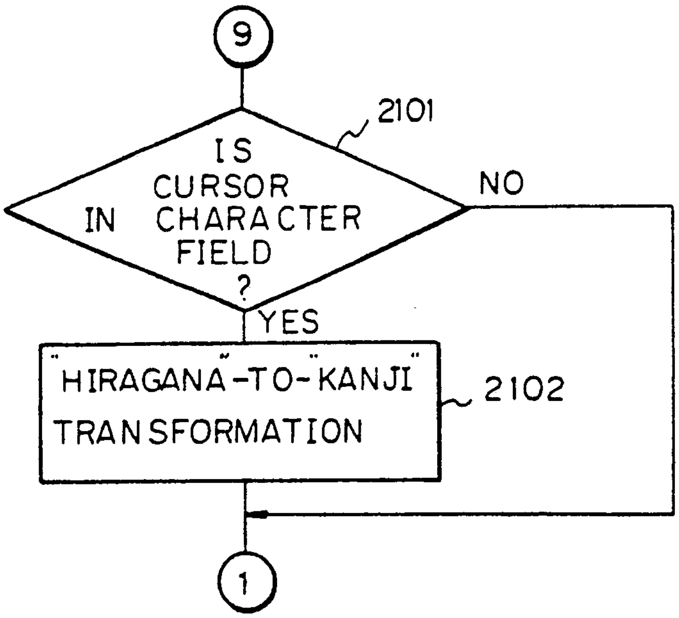
9
2101
IS CURSOR IN CHARACTER FIELD ?
NO
YES
"HIRAGANA"-TO-"KANJI" TRANSFORMATION
2102
1

Fig. 22

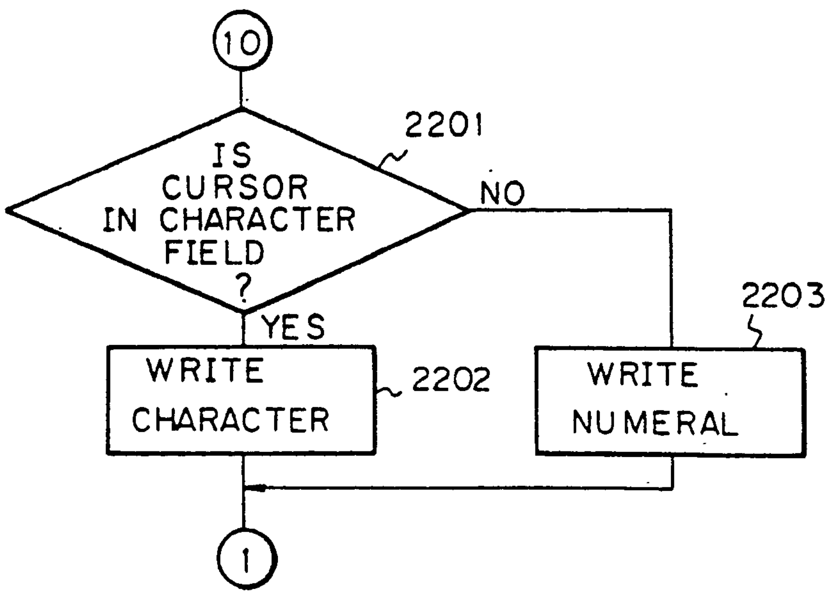
10
2201
IS CURSOR IN CHARACTER FIELD ?
NO
YES
WRITE CHARACTER
2202
2203
WRITE NUMERAL
1